# EUROPÄISCHE PATENTSCHRIFT

(11) **EP 1 960 183 B1**
(45) Veröffentlichungstag und Bekanntmachung des Hinweises auf die Patenterteilung: **16.03.2011**
(21) Anmeldenummer: 07846719.8
(22) Anmeldetag: 21.11.2007
(51) Int. Cl.: B29C 67/00, B22F 3/105, B22F 3/00

(54) **VORRICHTUNG ZUM SCHICHTWEISEN HERSTELLEN EINES DREIDIMENSIONALEN OBJEKTS**
DEVICE FOR BUILDING UP A THREE-DIMENSIONAL OBJECT LAYER BY LAYER
DISPOSITIF DE PRODUCTION PAR COUCHES D'UN OBJET TRIDIMENSIONNEL

(30) Priorität: 22.11.2006 DE 102006055053
(43) Veröffentlichungstag der Anmeldung: 27.08.2008
(73) Patentinhaber: EOS GmbH Electro Optical Systems, 82152 Krailling (DE)
(72) Erfinder: PERRET, Hans, 81543 München (DE)
(74) Vertreter: Prüfer & Partner GbR European Patent Attorneys
(86) Internationale Anmeldenummer: PCT/EP2007/010086
(87) Internationale Veröffentlichungsnummer: WO 2008/061733

(56) Entgegenhaltungen:
- EP-A- 1 375 115
- DE-U1- 9 400 364
- US-B1- 6 241 934
- US-B1- 6 261 077

## Beschreibung

Die vorliegende Erfindung betrifft eine Vorrichtung zum Herstellen eines dreidimensionalen Objekts durch schichtweises Verfestigen eines pulverförmigen Aufbaumaterials an den dem Objekt entsprechenden Stellen in den jeweiligen Schichten.

In der DE 10 2005 016 940 A1 ist eine Vorrichtung zum schichtweisen Herstellen eines dreidimensionalen Objekts beschrieben, die durch eine Lasersintervorrichtung gebildet wird. In der Vorrichtung wird ein pulverförmiges Aufbaumaterial verarbeitet. Zum Auftragen einer Schicht des pulverförmigen Materials ist eine Vorrichtung vorgesehen, die einen Beschichter, eine Förderwalze und einen Zufuhrschacht aufweist.

Aus der WO 00/21736 A1 ist eine Vorrichtung zum Herstellen eines dreidimensionalen Objektes beschrieben, die durch eine Laser-Sintermaschine gebildet ist. Es wird ein Wechselbehälter beschrieben, in dem eine Werkstückplattform als Behälterboden integriert ist. Der Wechselbehälter ist aus der Vorrichtung entnehmbar und in der Vorrichtung ist eine Kopplungsvorrichtung vorgesehen, mit der der Behälter in der Vorrichtung aufgenommen und die Werkstückplattform mit einem Antrieb verbunden wird.

Bei derartigen Vorrichtungen erzeugt eine Energiequelle, die z.B. im Fall einer Lasersintervorrichtung ein Laser ist, Wärme, die aus der Vorrichtung abgeführt werden muss, um ein Überhitzen der Vorrichtung zu verhindern. Ein Bauraum, in dem dreidimensionale Objekte schichtweise aufgebaut werden, wird auch erwärmt, sodass sich dessen begrenzende Wände erhitzen. Die erhitzten Wände des Bauraums können daran angrenzend angeordnete Komponenten eines Optiksystems bzw. Komponenten einer Steuerung der Vorrichtung durch Wärmeabgabe an diese nachteilig beeinflussen. Weitere Vorrichtungen sind bekannt aus US 6,261,077 B1; EP-1375115 A und DE 94 00 364 U1. Die Patentschrift US-6.261.077 B1 beschreiht eine Vorrichtung gemäß dem Oberbegriff des Anspruchs 1.

Es ist Aufgabe der vorliegenden Erfindung, eine Vorrichtung der eingangs beschriebenen Art zu schaffen, bei der Wärme effizient und kostengünstig aus der Vorrichtung abgeführt werden kann.

Die Aufgabe wird durch eine Vorrichtung nach Anspruch 1 gelöst. Vorteilhafte Weiterbildungen sind in den Unteransprüchen angegeben.

Durch Kühlen der Energiequelle mit einem Lüfter und Weiterleiten des Luftstroms, um auch eine begrenzende Wand des Bauraums zu kühlen, kann mit einem Kühlsystem effizient Wärme aus der Vorrichtung abgeführt werden. Die Verwendung eines gemeinsamen Kühlsystems ermöglicht eine platzsparende und kostengünstige Konstruktion.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Darstellung eines Rahmen- systems gemäß einer Ausführungsform;
- Fig. 2: eine schematische Darstellung der Strahl- führung bei der Ausführungsform gemäß Fig. 1 ;
- Fig. 3a und 3b: schematische Detaildarstellungen der Blen- den aus Fig. 2;
- Fig. 4: eine schematische perspektivische Detail- darstellung eines Lüftersystems im Bereich der Strahlführung bei der Ausführungsform;
- Fig. 5: eine schematische Darstellung des Bauraums bei der Ausführungsform;
- Fig. 6: eine schematische Darstellung eines Baube- hälter-Ventilationssystems bei der Ausfüh- rungsform;
- Fig. 7: eine schematische Darstellung der Befesti- gung einer Dosiervorrichtung bei der Aus- führungsform;
- Fig. 8: eine schematische Darstellung der Befesti- gung eines Bauraum-Heizmoduls bei der Aus- führungsform;
- Fig. 9: eine schematische Darstellung der Befesti- gung eines Beschichters bei der Ausfüh- rungsform;
- Fig. 10: eine schematische Darstellung der Halterung des Baubehälters;
- Fig. 11: eine schematische Darstellung einer Bau- plattformdichtung bei der Ausführungsform;
- Fig. 12: eine schematische Darstellung eines Bauma- terialzufuhrsystems bei der Ausführungs- form;
- Fig. 13: eine schematische Darstellung eines Be- schichtungssystems bei der Ausführungsform;
- Fig. 14: eine schematische Ansicht einer Schicht zur Verwendung in einem Strahljustierungsver- fahren; und
- Fig. 15: eine weitere schematische Darstellung zur Beschreibung des Baumaterialzufuhrsystems.

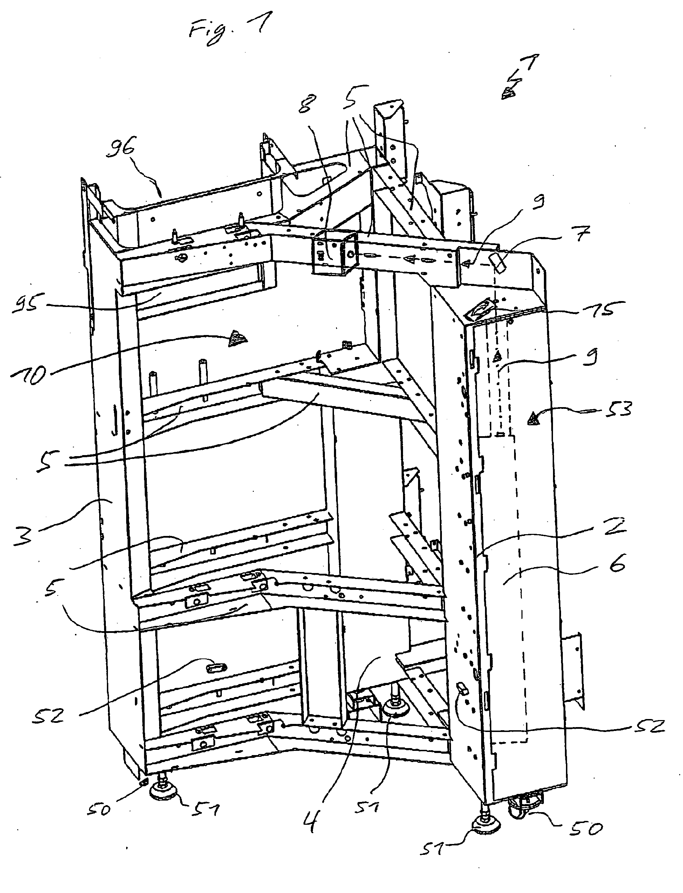

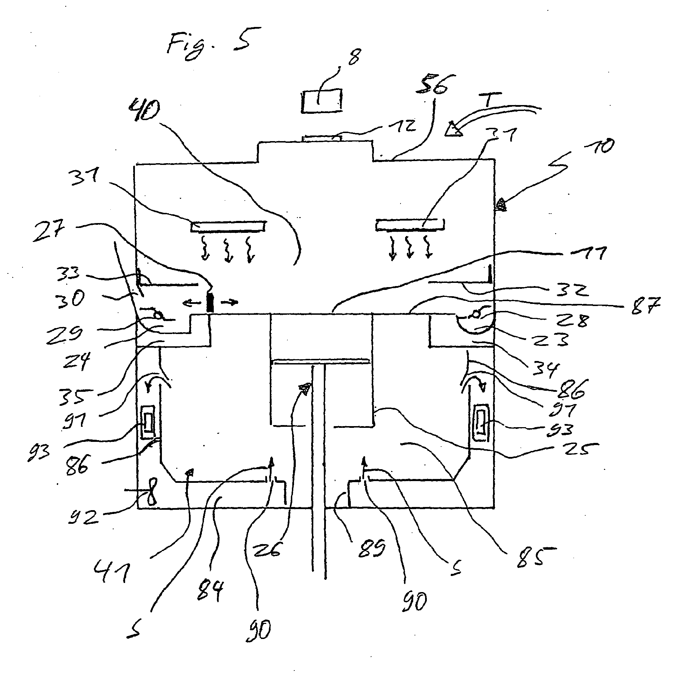

Im Folgenden wird mit Bezug auf die Fig. 1 und 5 der Grundaufbau einer Vorrichtung zum Erzeugen eines dreidimensionalen Objekts durch schichtweises Verfestigen eines Aufbaumaterials, die gemäß einer Ausführungsform als Lasersintervorrichtung ausgebildet ist, beschrieben. Bei der Vorrichtung zum Erzeugen eines dreidimensionalen Objekts werden Schichten des Aufbaumaterials sukzessiv übereinander aufgetragen und die dem zu fertigenden Objekt entsprechenden Stellen in den jeweiligen Schichten werden jeweils vor dem Auftragen einer nachfolgenden Schicht selektiv verfestigt. Bei der dargestellten Ausführungsform wird ein pulverförmiges Aufbaumaterial verwendet, das durch Einwirkung eines Energiestrahls an ausgewählten Stellen verfestigt wird. Das pulverförmige Aufbaumaterial wird bei der dargestellten Ausführungsform mittels eines Laserstrahls an den ausgewählten Stellen lokal erhitzt, sodass es mit benachbarten Bestandteilen des Aufbaumaterials durch Sintern oder Aufschmelzen verbunden wird.

Wie in Fig. 1 dargestellt ist, weist die Lasersinter-Vorrichtung ein Optiksystem auf, dessen Bauteile jeweils an den Komponenten des Maschinenrahmens befestigt sind. In dem Maschinenrahmen ist ein Bauraum 10 vorgesehen, der in Fig. 5 schematisch dargestellt ist.

Bei der dargestellten Ausführungsform beinhaltet das Optiksystem einen Laser 6, einen Umlenkspiegel 7 und einen Scanner 8. Der Laser 6 erzeugt einen Strahl 9, der auf den Umlenkspiegel 7 trifft und von diesem in Richtung des Scanners 8 umgelenkt wird. Alternativ kann anstelle des Lasers auch eine andere Energiequelle wie z.B. eine andere Strahlungsquelle verwendet werden, die einen Energiestrahl erzeugt, der in Richtung des Scanners 8 gelenkt wird. Der Scanner 8 ist in bekannter Weise derart ausgebildet, dass er den eintreffenden Strahl 9 auf beliebige Stellen in einer Bauebene 11 richten kann, die sich in dem Bauraum 10 befindet, wie in Fig. 5 dargestellt ist. Um dies zu ermöglichen, ist zwischen dem Scanner 8 und dem Bauraum 10 in einer oberen Trennwand 56 des Bauraums 10 ein Eintrittsfenster 12 vorgesehen, das ein Durchtreten des Strahls 9 in den Bauraum 10 ermöglicht.

Als Nächstes wird mit Bezug auf Fig. 5 der Bauraum der Vorrichtung bei der Ausführungsform beschrieben.

Wie in Fig. 5 zu sehen ist, ist in dem Bauraum 10 ein nach oben offener Behälter 25 vorgesehen. In dem Behälter 25 ist eine Trägervorrichtung 26 zum Tragen eines zu bildenden dreidimensionalen Objekts angeordnet. Die Trägervorrichtung 26 ist mittels eines nicht dargestellten Antriebs in der vertikalen Richtung in dem Behälter 25 hin und her bewegbar. Im Bereich des oberen Randes des Behälters 25 ist die Bauebene 11 definiert. Das Eintrittsfenster 12 für den durch den Scanner 8 auf die Bauebene 11 gerichteten Strahl 9 ist oberhalb der Bauebene 11 angeordnet. Es ist ein Beschichter 27 zum Auftragen von zu verfestigendem Aufbaumaterial auf die Oberfläche der Trägervorrichtung 26 bzw. eine zuvor verfestigte Schicht vorgesehen. Der Beschichter 27 ist mittels eines durch Pfeile in Fig. 5 schematisch angedeuteten Antriebs in der horizontalen Richtung über der Bauebene 11 bewegbar. Auf beiden Seiten der Bauebene 11 sind Dosiervorrichtungen 28 bzw. 29 vorgesehen, die eine vorbestimmte Menge des Aufbaumaterials für den Beschichter 27 zum Auftragen bereitstellen.

Auf der Seite der Dosiervorrichtung 29 ist eine Zufuhröffnung 30 vorgesehen. Die Zufuhröffnung 30 erstreckt sich in der Richtung senkrecht zu der Darstellungsebene von Fig. 5 über die gesamte Breite der Bauebene 11. Die Zufuhröffnung dient dazu, Aufbaumaterial, das bei der dargestellten Ausführungsform ein durch Strahlung verfestigbares Pulvermaterial ist, in den Bauraum zuzuführen.

Wie in Fig. 5 schematisch dargestellt ist, ist der Bauraum bei der Ausführungsform in einen oberen Bereich 40 und einen unteren Bereich 41 unterteilt. Der obere Bereich 40 bildet den eigentlichen Arbeitsbereich, in dem ein schichtweiser Auftrag des Aufbaumaterials und dessen selektive Verfestigung erfolgen. Der untere Bereich 41 nimmt den Behälter 25 auf.

Bei der gezeigten Ausführungsform sind einige Bauteile durch ein Verfahren zum schichtweisen Herstellen eines dreidimensionalen Elements durch selektives Verfestigen von dem Objekt entsprechenden Stellen in den jeweiligen Schichten gebildet. Bei der Ausführungsform wird zu deren Herstellung ein Lasersinterverfahren verwendet. Ein solches Verfahren weist gegenüber herkömmlichen Verfahren zum Erzeugen von dreidimensionalen Gegenständen, wie z.B. Fräsen, Drehen, Spritzguss etc., insbesondere dann jeweils Vorteile auf, wenn komplexe Geometrien erzeugt werden sollen und/oder nur relativ geringe Stückzahlen hergestellt werden müssen.

### Betrieb der Vorrichtung

Bei dem Betrieb der Vorrichtung 1 wird das Aufbaumaterial über die Zufuhröffnung 30 in den Bauraum 10 zugeführt und mit den Dosiervorrichtungen 28, 29 in einer vorbestimmten Menge dem Beschichter 27 zugeführt. Der Beschichter 27 trägt eine Schicht des Aufbaumaterials auf der Trägervorrichtung 26 oder einer zuvor verfestigten Schicht auf und mittels des Lasers 6 und des Scanners 8 wird der Strahl 9 auf ausgewählte Positionen in der Bauebene 11 gelenkt, um dort das Aufbaumaterial an den Stellen selektiv zu verfestigen, die dem zu bildenden dreidimensionalen Objekt entsprechen. Anschließend wird die Trägervorrichtung um die Dicke einer Schicht abgesenkt, eine neue Schicht aufgetragen und das Verfahren wiederholt, bis sämtliche Schichten des zu bildenden Objekts erzeugt sind.

Im Folgenden werden einzelne Komponenten der Vorrichtung detaillierter beschrieben.

### Rahmenkonstruktion

Die Rahmenkonstruktion der Vorrichtung der gezeigten Ausführungsform wird zunächst anhand von Fig. 1 beschrieben. Wie in Fig. 1 dargestellt ist, weist die Vorrichtung 1 einen Maschinenrahmen auf, der durch drei Grundträger 2, 3 und 4 gebildet wird, die durch Querverstrebungen 5 miteinander verbunden sind. Die drei Grundträger 2, 3 und 4 verlaufen im Wesentlichen vertikal und bilden bei der dargestellten Ausführungsform drei Ecken der Vorrichtung. Die Vorrichtung 1 hat in Draufsicht somit im Wesentlichen die Außenkontur eines Dreiecks. Die Grundträger 2, 3 und 4 und die Querverstrebungen 5 sind dabei derart angeordnet, dass die Außenkontur im Wesentlichen der eines rechtwinkligen Dreiecks entspricht, wobei die Seite der Hypotenuse die Frontseite der Vorrichtung bildet. Die Querverstrebungen 5 verlaufen im Wesentlichen horizontal und verbinden die Grundträger derart, dass ein starrer, verwindungssteifer Maschinenrahmen gebildet ist, dessen Komponenten auch bei dem einseitigen Einwirken von Kräften ihre relative Position zueinander nicht bzw. nur minimal verändern.

Durch die Ausbildung mit drei Grundträgern 2, 3 und 4, die im Wesentlichen vertikal verlaufen und in Form eines Dreiecks angeordnet sind, kann die Vorrichtung 1 an drei Punkten auf dem Untergrund abgestützt werden. Aufgrund dieser Dreibein-Konstruktion kann die Vorrichtung schnell und unkompliziert derart ausgerichtet werden, dass ein Wackeln oder Kippen bezüglich des Untergrundes verhindert ist. Insbesondere kann eine Ausrichtungsänderung bezüglich des Untergrunds durch Verändern der Höhe der Auflage eines der drei Auflagepunkte erzielt werden, da dies zu einer Drehung um die Verbindungslinie der anderen beiden Auflagepunkte führt. Bei einer Vierpunkt- oder Mehrpunkt-Auflage müssten zu einer Ausrichtungsänderung jeweils zumindest zwei Auflagepunkte in ihrer Höhe verändert werden, um wieder eine stabile Auflage zu erzielen.

An der dem Boden zugewandten Unterseite der Grundträger 2, 3 und 4 sind jeweils eine Rolle 50 und ein höhenverstellbarer Stützfuß 51 angeordnet. Die Stützfüße 51 sind dabei höhenverstellbar an dem jeweiligen Grundträger 2, 3 oder 4 angebracht. Die Stützfüße 51 sind jeweils in eine erste Position bewegbar, in der die zugehörige Rolle 50 einen größeren Abstand von der Unterseite des zugehörigen Grundträgers aufweist als die Unterseite des Stützfußes 51. In dieser ersten Position steht die Vorrichtung 1 somit auf den Rollen 50 auf und die Stützfüße 51 befinden sich in einem Abstand von dem Untergrund. Die Rollen 50 sind drehbar an den Grundträgern 2, 3 und 4 befestigt, sodass die Vorrichtung 1 auf den Rollen 50 in beliebigen Richtungen über den Untergrund bewegt werden kann. Ferner sind die Stützfüße 51 jeweils in eine zweite Position bewegbar, in der die Unterseiten der Stützfüße 51 weiter von den Unterseiten der Grundträger 2, 3, 4 abstehen als die zugehörigen Rollen 50. In dieser Stellung steht die Vorrichtung 1 auf den Stützfüßen 51 auf und es wird sicher verhindert, dass sich diese relativ zu dem Untergrund bewegt.

Bei der dargestellten Ausführungsform sind die Stützfüße 51 jeweils auf der dem zugehörigen Grundträger 2, 3 oder 4 zugewandten Seite in Form eines Gewindestabs mit Außengewinde ausgebildet. In der Unterseite der jeweiligen zugehörigen Grundträger 2, 3 und 4 sind jeweils entsprechende Bohrungen mit Innengewinde vorgesehen, in die die Stützfüße 51 eingeschraubt werden können. Durch Ein- oder Ausschrauben der Stützfüße 51 in den zugehörigen Grundträger 2, 3 oder 4 kann somit der Abstand der Unterseite des jeweiligen Stützfußes 51 von dem Grundträger stufenlos eingestellt werden.

Wie in Fig. 1 dargestellt ist, sind zwei Wasserwaagen 52 an zwei verschiedenen Positionen an dem Maschinenrahmen angebracht. Die Wasserwaagen 52 sind fest ausgerichtet an der Vorrichtung 1 befestigt. Bei der gezeigten Ausführungsform sind beide Wasserwaagen 52 in einer Ebene parallel zur Horizontalen angeordnet und weisen in dieser Ebene einen Winkel von etwa 90° zueinander auf. Die beiden Wasserwaagen zeigen an, ob die Vorrichtung 1 bezüglich der Horizontalen optimal ausgerichtet ist. Zur Ausrichtung der Vorrichtung 1 können die drei Stützfüße 51 individuell in ihrer Höhe verändert werden und die Änderung der Ausrichtung der Vorrichtung 1 kann visuell anhand der Wasserwaagen 52 verfolgt werden. Die Komponenten innerhalb der Vorrichtung sind relativ zueinander vorjustiert. Da sie steif im Rahmensystem befestigt sind und aufgrund der steifen Rahmenkonstruktion der Vorrichtung 1 bleibt ihre relative Lage zueinander erhalten. Somit befinden sich nach der Ausrichtung der Vorrichtung 1 alle Komponenten, deren exakte räumliche Positionierung zueinander für eine einwandfreie Funktion erforderlich ist, in der korrekten relativen Stellung. Die Wasserwaagen erleichtern es, die Vorrichtung senkrecht aufzustellen.Folglich ist eine schnelle und effiziente Ausrichtung der Vorrichtung 1 nach einem Transport oder einer Standortänderung möglich. Die Konstruktion mit drei Grundträgern 2, 3, 4 und zugehörigen Stützfüßen 51 trägt dazu bei, dass die Ausrichtung der Vorrichtung 1 in wenigen Arbeitsschritten erfolgen kann.

### Optiksystem

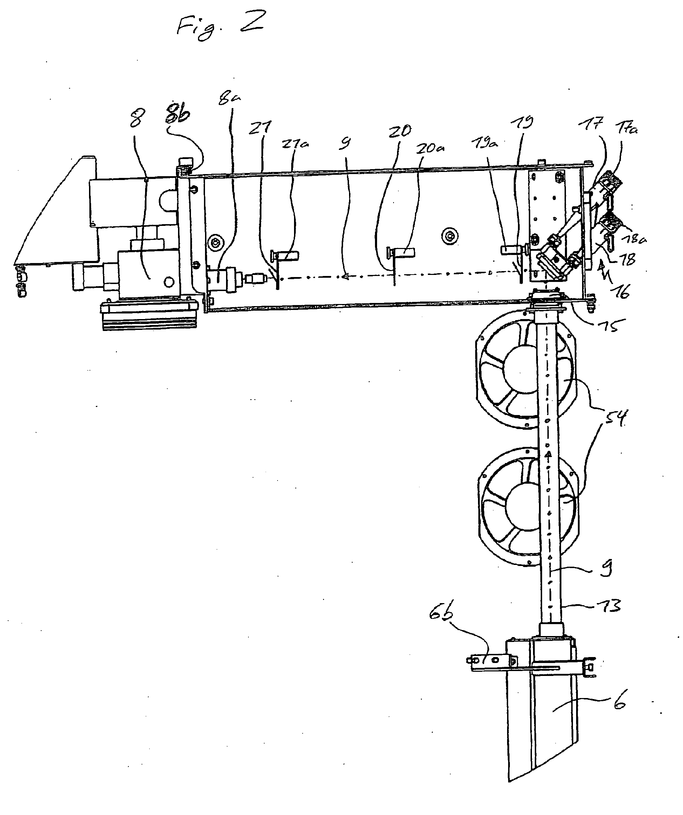

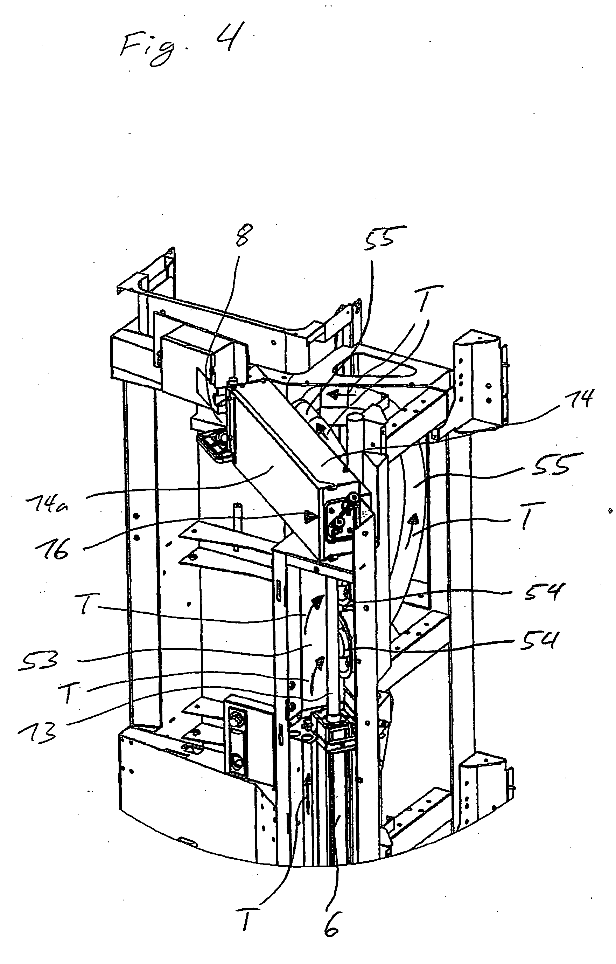

Das Optiksystem wird im Folgenden anhand der Fig. 1, 2 und 4 näher beschrieben. Wie in Fig.1 zu sehen ist, ist die Energiequelle in Form des Lasers 6 in einem bzw. parallel zu einem der vertikalen Grundträger 2 des Maschinenrahmens angeordnet und justierbar mit diesem verbunden. Der Strahl 9 wird ausgehend von dem Laser 6 durch ein Rohr 13 geleitet. Das Rohr 13 ist an seinem einen Ende mit dem Gehäuse des Lasers 6 verbunden und an seinem anderen Ende mit einem Gehäuse 14, das den Umlenkspiegel 7 und weitere Bauteile umschließt. Der Strahl 9 verläuft von dem Laser 6 zu dem Umlenkspiegel 7 somit in der vertikalen Richtung. Wie in Fig. 4 zu sehen ist, weist das Gehäuse 14 eine Seitenwand 14a auf, die von dem Gehäuse 14 entfernt werden kann. In Fig. 2 ist das Gehäuse 14 mit entfernter Seitenwand 14a dargestellt.

Wie in den Fig. 2 und 4 zu sehen ist, ist ein dem Rohr 13 abgewandtes Ende des Gehäuses 14 mit einer Eingangsseite des Scanners 8 verbunden und das Gehäuse 14 ist fest mit Komponenten des Maschinenrahmens verbunden. Das Rohr 13 und das Gehäuse 14 sind somit derart angeordnet, dass der Strahl 9 von dem Laser 6 zu dem Scanner 8 in einem nach außen abgeschlossenen Raum in dem Rohr 13 und dem Gehäuse 14 verläuft. An der Verbindungsstelle des Rohres 13 mit dem Gehäuse 14 ist ein in den Figuren nur schematisch dargestellter Shutter 15 vorgesehen. Der Shutter 15 ist dabei derart ausgebildet, dass der Strahlgang des Strahls 9 von dem Laser 6 zu dem Umlenkspiegel 7 unterbrochen wird, wenn die Seitenwand 14a von dem Gehäuse 14 entfernt wird. Durch wird diese Konstruktion wird sichergestellt, dass bei arbeitender Energiequelle nicht versehentlich durch Unachtsamkeit eine Schädigung einer bedienenden Person auftreten kann, wenn die Seitenwand 14a entfernt wird. In der Ausführungsform ist der Shutter 15 durch einen mechanischen Schieber realisiert, der einen Strahldurchtritt von dem Rohr 13 zu dem Gehäuse 14 verschließt, wenn die Seitenwand 14a entfernt wird.

Wie in den Fig. 1 und 2 zu sehen ist, wird der Strahl 9 von dem Umlenkspiegel 7 zu einem Eintrittsbereich 8a des Scanners umgelenkt. Der Umlenkspiegel 7 ist in seiner Ausrichtung verstellbar aufgehängt und mit einem Einstellmechanismus 16 zum Einstellen seiner Ausrichtung versehen. Der Einstellmechanismus 16 beinhaltet zwei Stellelemente 17 und 18, die jeweils derart angeordnet sind, dass sich ein Antrieb 17a bzw. 18a der Stellelement 17 und 18 außerhalb des Gehäuses 14 befindet. Die Antriebe 17a und 18a sind somit bei geschlossenem Gehäuse 14 von außen zugänglich und die Änderung der Ausrichtung des Umlenkspiegels 7 kann bei geschlossenem Gehäuse 14 erfolgen. Bei der dargestellten Ausführungsform sind die Stellelemente 17 und 18 jeweils durch mechanische Stellschrauben gebildet, die im Bereich der Antriebe 17a und 18a je eine Skala aufweisen, die zu der Ausrichtung des Umlenkspiegels korrespondiert. Die Antriebe 17a und 18a sind als Drehknöpfe ausgebildet. Bei der gezeigten Ausführungsform sind die Stellelemente 17 und 18 durch ein Lasersinterverfahren hergestellt. Die Drehknöpfe sind arretierbar, um ein versehentliches Verstellen zu verhindern.

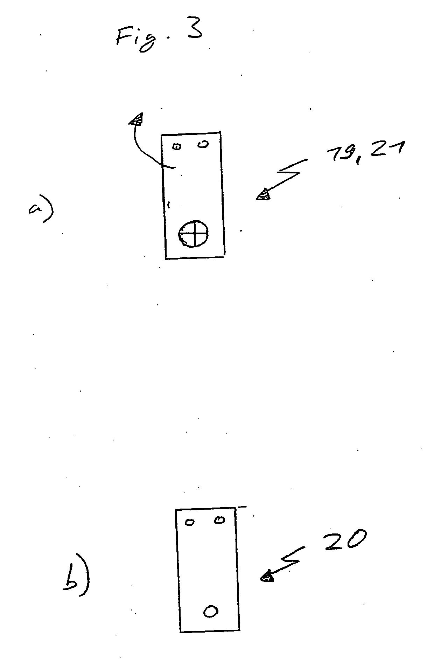

Eine exakte Einstellung der Ausrichtung des Strahls 9 auf den Eintrittsbereich 8a des Scanners ist für eine optimale Funktionsweise der Vorrichtung erforderlich. Zu diesem Zweck sind in dem Gehäuse 14 integriert Blenden 19, 20, 21 vorgesehen, die in den Strahlgang eingebracht werden können. Bei der dargestellten Ausführungsform sind in dem Gehäuse drei Blenden 19, 20, 21 vorgesehen, es kann jedoch auch eine höhere oder eine geringere Anzahl vorgesehen werden. Bei der Ausführungsform sind die nahe des Umlenkspiegels 7 angeordnete Blende 19 und die nahe des Eintrittsbereichs 8a des Scanners 8 angeordnete Blende 21 jeweils als Blenden mit einem Fadenkreuz ausgebildet, wie in Fig. 3a dargestellt ist, und die dazwischen angeordnete Blende 20 ist als eine Lochblende ausgebildet, wie in Fig. 3b dargestellt ist. Es sind auch weiter Gestaltungen der Blenden für unterschiedliche Justieraufgaben möglich. Es können ferner auch mehrere Sätze von Blenden vorgesehen werden, die je nach Anforderungen an eine nötige Justierung ausgetauscht werden können. Je nach verwendeter Energiequelle für den Strahl 9 können auch statt der mechanischen Blenden dem Fachmann geläufige andersartige Elemente vorgesehen werden, mit denen die Position des Strahls erfasste werden kann, wie z.B. optische Detektoren zur Detektion der Position des Strahls.

Die Blenden 19, 20, 21 sind jeweils schwenkbar an einer an dem Gehäuse 14 befestigten Halterung 19a, 20a bzw. 21a befestigt. Sie können in einer ersten Stellung in den Strahlgang eingebracht und fixiert werden und in einer zweiten Stellung aus dem Strahlgang entfernt fixiert werden. Die Aufhängung der Blenden kann z.B. durch eine Achse realisiert werden, um die die Blenden 19, 20 und 21 in einer Richtung senkrecht zum Strahlgang schwenkbar sind. Das Fixieren der Blenden 19, 20, 21 in den jeweiligen Stellungen kann z.B. durch eine Rändelschraube erfolgen, die auf diese Achse aufgeschraubt wird. Es sind jedoch viele weitere Arten der Aufhängung möglich, die sich dem Fachmann ohne weiteres aufgrund seines Fachwissens erschließen. Es ist z.B. auch ein Mechanismus möglich, bei dem die Blenden in den beiden Positionen einrasten können.

Wie in Fig. 1 lediglich schematisch dargstellt ist, ist der Scanner 8 ebenfalls an einer Komponente des Maschinenrahmens befestigt. In der dargestellten Ausführungsform ist der Scanner 8 an einer Querverstrebung 5 montiert. Der Scanner 8 ist bei der Ausführungsform derart aufgehängt, dass eine Justage der Ausrichtung des Scanners durch Schwenken um eine Achse ermöglicht ist, die parallel zu dem Strahlgang von dem Umlenkspiegel 7 zu dem Eintrittsbereich 8a des Scanners verläuft. Für diese Justage ist ein Einstellmechanismus 8b vorgesehen.Dies ermöglicht eine einfache und schnelle Feinjustierung der Ausrichtung des Scanners 8.

Der Strahl 9 wird von dem Laser 6 zu dem Scanner 8 nur ein Mal umgelenkt. Die Umlenkung erfolgt über den Umlenkspiegel 7, dessen Ausrichtung bei geschlossenem Gehäuse 14 justiert werden kann. Dies führt zu einem Strahlverlauf, der in einfacher Weise durch Justieren der Position von wenigen Komponenten justiert werden kann. Bei der dargestellten Ausführungsform ist somit lediglich eine Justierung der Position des Lasers 6, des Umlenkspiegels 7 und des Scanners 8 erforderlich. Die Position des Lasers 6 kann über einen Einstellmechanismus 6b justiert werden. Der Laser 6, der Umlenkspiegel 7 und der Scanner 8 sind jeweils direkt an den Komponenten des starren Rahmensystems befestigt. Diese verändern somit auch bei einem Transport oder einer Standortänderung der Vorrichtung 1 ihre relative Position zueinander nicht bzw. nur leicht. Eine Feinjustierung kann folglich in kurzer Zeit und somit effizient erfolgen.

Die Blenden 19, 20 und 21 können zu einer Justierung des Strahlverlaufs jeweils einzeln oder in Kombination miteinander in den Strahlgang eingebracht werden. Dies verbessert zusätzlich die Möglichkeit einer schnellen und effizienten Justierung des Strahlverlaufs. Es können somit Kosten bei der Inbetriebnahme und Wartung der Vorrichtung 1 eingespart werden, da weniger Arbeitsaufwand für die Justierung erforderlich ist.

### Verfahren zur Strahljustierung

Es werden mögliche Verfahren zur Justierung des Strahlverlaufs beschrieben.

Bei einem Verfahren wird jeweils eine der beiden Fadenkreuz-Blenden 19 und 21 in den Strahlgang eingebracht und direkt hinter dem Fadenkreuz wird Belichtungspapier eingebracht. Das Belichtungspapier wird anschließend mit einem Laserpuls belichtet und das Schattenbild des Fadenkreuzes wird beurteilt. Der Mittelpunkt des Strahlquerschnitts sollte genau mit dem Kreuzmittelpunkt übereinstimmen. Der Strahlverlauf wird durch Verstellen der Ausrichtung des Umlenkspiegels 7 über die Stellelemente 17 und 18 und der Lage des Lasers 6 nachjustiert. Dieses Verfahren eignet sich auch für den Fall, dass der Strahlverlauf zunächst stark von dem gewünschten Verlauf abweicht. Es ist auch möglich, bei diesem Verfahren die Lochblende 20 zusätzlich in den Strahlverlauf einzubringen.

Bei einem Verfahren zur Nachjustage des Optiksystems wird die als Lochblende ausgebildete Blende 20 in den Strahlgang eingebracht und anschließend das Gehäuse 14 verschlossen. Es wird ein Leistungsmessgerät, dass die Gesamtleistung des Strahls 9 misst, in der Bauebene 11 platziert. Der Scanner 8 wird so angesteuert, dass der Strahl 9 bei exakter Justierung optimal auf das Leistungsmessgerät gerichtet wäre. Die durch das Leistungsmessgerät gemessene Strahlleistung wird überwacht und die Ausrichtung des Umlenkspiegels 7 wird durch Betätigung der Stellelemente 17 und 18 variiert. Die Ausrichtung des Umlenkspiegels 7 wird solange variiert, bis die maximale Strahlleistung durch das Leistungsmessgerät gemessen wird. In dieser Position ist der Strahl 9 von dem Umlenkspiegel 7 optimal auf den Eintrittsbereich 8a des Scanners 8 ausgerichtet. Bei diesem Verfahren kann auch ohne Lochblende gearbeitet werden, sodass die Eintrittsöffnung am Scanner 8 die Blendenwirkung übernimmt.

Diese Art der Einstellung ermöglicht eine einfache und schnelle Justierung des Strahlverlaufs in dem Fall, in dem nur eine schwache Positionsänderung zwischen den Komponenten des Optiksystems aufgetreten ist und nur eine Feinjustierung erforderlich ist. Durch das Verfahren kann die Justierung in kurzer Zeit erfolgen und die Kosten für die Justierung bei der Inbetriebnahme und bei der Wartung können reduziert werden. Je nach Justierungsaufgabe ist es auch möglich, dieses Verfahren durchzuführen, ohne zunächst die Lochblende 20 in den Strahlgang einzubringen. In diesem Fall wird weitere Zeit gespart und die Arbeitskosten werden reduziert.

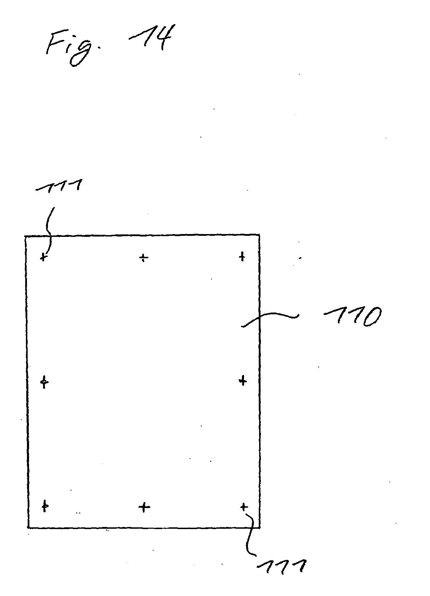

Bei einem weiteren Verfahren wird eine Schicht 110 eines Materials, das auf Bestrahlung mit dem Strahl 9 empfindlich reagiert, z.B. ein sich durch Temperatureinwirkung verfärbendes Papier, in einem definierten Bereich in der Bauebene 11 platziert. Die Schicht 110 ist an wenigen ausgewählten Stellen an dem Rand des Baufeldes, dass bei einem Bauprozess mit dem Strahl 9 zu bestrahlen ist, mit Markierungen 111 versehen, wie in Fig. 14 dargestellt ist. Anschließend werden über den Scanner 8 mit dem Strahl 9 die Stellen belichtet, die bei korrekter Justierung den Markierungen 111 entsprechen würden. Anschließend werden die Abweichungen der belichteten Stellen von den Markierungen 111 in zwei Richtungen auf der Schicht 110 vermessen. Die Vermessung kann z.B. in der einfachsten Weise mit einem Lineal erfolgen. Aus den vermessenen Randpunkten wird anschließend ermittelt, ob bezüglich der optimalen Justierung z.B. Fehler in der Vergrößerung oder eine Verkippung aufgetreten sind. Die Ermittelung der aufgetretenen Fehler kann z.B. durch Eingeben der Messwerte in ein entsprechendes Auswertungsprogramm erfolgen.

Vergrößerungsfehler können z.B. durch mechanische Abstandsänderungen zwischen dem Scanner 8 und dem Baufeld in der Bauebene 11 auftreten oder durch elektronischen Drift der elektronischen Bauteile des Scanners 8. Verkippungsfehler können z.B. durch mechanische Abstands- bzw. Winkeländerungen auftreten. Die gefundenen Vergrößerungs- und/oder Verkippungsfehler können, je nach gefundenem Fehler, z.B. durch Nachjustierung der horizontalen Ausrichtung des Scanners 8 mit der oben beschriebenen Feinjustierung kompensiert werden oder durch Berechnung von Korrekturparametern, die im Rahmen eines Steuerungsprogramms bei der Ansteuerung des Scanners 8 einer programmtechnische Korrektur der Zielpunkte für den Strahl 9 vornehmen.

Bei dem Verfahren werden nur einzelne Messpunkte am Rand des Baufeldes vermessen und für Punkte des Baufeldes zwischen den Messpunkten erfolgt eine Bestimmung des Fehlers durch Interpolation. Die Korrektur des Fehlers für Punkte zwischen den Messpunkten erfolgt ebenfalls über Interpolation. Es müssen somit nur wenige Messpunkte aufgenommen werden, was in kurzer Zeit und mit geringem. Arbeitsaufwand erfolgen kann. Die anfallende Arbeitszeit für Justierungs- und Wartungsarbeiten kann folglich deutlich reduziert werden und daher können auch die anfallenden Betriebskosten gesenkt werden.

### Laser- und Optikkühlung

Anhand der Fig. 1, 2 und 4 wird im Folgenden ein Ventilationssystem für das Optiksystem beschrieben.

Der Grundträger 2 weist in seinem Inneren einen Hohlraum 53 auf, in dem sich der Laser 6 und das Rohr 13 befinden. Es sind zwei Lüfter 54 vorgesehen. Die Lüfter 54 erzeugen einen Luftstrom T, der warme Luft von dem Laser 6 abführt und diesen somit kühlt. Bei der Ausführungsform sind die Lüfter 54 in dem Bereich des Rohres 13 in dem Hohlraum 53 vorgesehen. Der Hohlraum 53 ist über zwei Schläuche 55 mit dem Bereich der Vorrichtung 1 oberhalb des Bauraums 10 verbunden, in dem der Scanner 8, der Umlenkspiegel 7 und die Blenden 19, 20, 21 vorgesehen sind.

Wie in Fig. 5 zu sehen ist, wird der Luftstrom T durch die Lüfter 54 auf die obere Trennwand 56 des Bauraums 10 gerichtet.

Der Luftstrom zum Kühlen der Energiequelle wird somit auch in Richtung des Optiksystems umgelenkt.

Das Kühlsystem zum Kühlen der Energiequelle in Form des Lasers 6 wird bei der Ausführungsform somit gleichzeitig zum Kühlen des Optiksystems verwendet, das den Scanner 8, den Umlenkspiegel 7 und die Blenden 19, 20 und 21 aufweist. Es wird daher ermöglicht mit einem Ventilationssystem sämtliche Komponenten des Optiksystems zu kühlen.

Da der Luftstrom T auch auf die obere Trennwand 56 des Bauraums 10 geleitet wird, kann mit demselben Ventilationssystem auch die Oberseite des Bauraums 10 gekühlt werden und eine zu starke Erwärmung von oberhalb des Bauraums 10 angeordneten Komponenten der Steuerung der Vorrichtung 1 kann verhindert werden. Die Kühlung der Oberseite des Bauraums 10 erfolgt mit dem Ventilationssystem des Optiksystems. Es braucht daher keine separate Kühlung bereitgestellt zu werden, da das Kühlsystem des Lasers auch dazu verwendet wird, Prozesswärme von dem Bauprozess aus der Vorrichtung 1 abzuführen. Es können somit Kosten eingespart werden und die Vorrichtung 1 kann in kompakter Weise gebaut werden.

Die Verbindung des Hohlraums 53, in dem sich der Laser 6 befindet, mit der Oberseite des Bauraums 10 erfolgt bei der Ausführungsform durch zwei Schläuche. Es ist jedoch z.B. auch möglich, eine Verbindung über Strömungskanäle in dem Maschinenrahmen selber zu realisieren. Es kann auch lediglich ein Schlauch bzw. ein Verbindungskanal vorgesehen werden. Obwohl zwei Lüfter 54 dargestellt sind, können je nach erforderlicher Kühlleistung auch nur ein Lüfter oder mehrere Lüfter 54 vorgesehen sein. Das Vorsehen eines gemeinsamen Ventilationssystems für das Optiksystem und die Oberseite des Bauraums 10 ist nicht auf eine Konstruktion beschränkt, bei der die Energiequelle ein Laser ist bzw. bei der die Energiequelle in dem Grundträger 2 angeordnet ist. Der Effekt einer effizienten und kostengünstigen Kühlung des Optiksystems und der Bauraumoberseite wird auch bei anderen Anordnungen erreicht. Die Anordnung der Energiequelle in einem Grundträger des Rahmens ermöglicht jedoch eine platzsparende Realisierung.

Im Folgenden werden einzelne Komponenten der Vorrichtung 1 in dem Bauraum 10 beschrieben.

### Heizvorrichtung

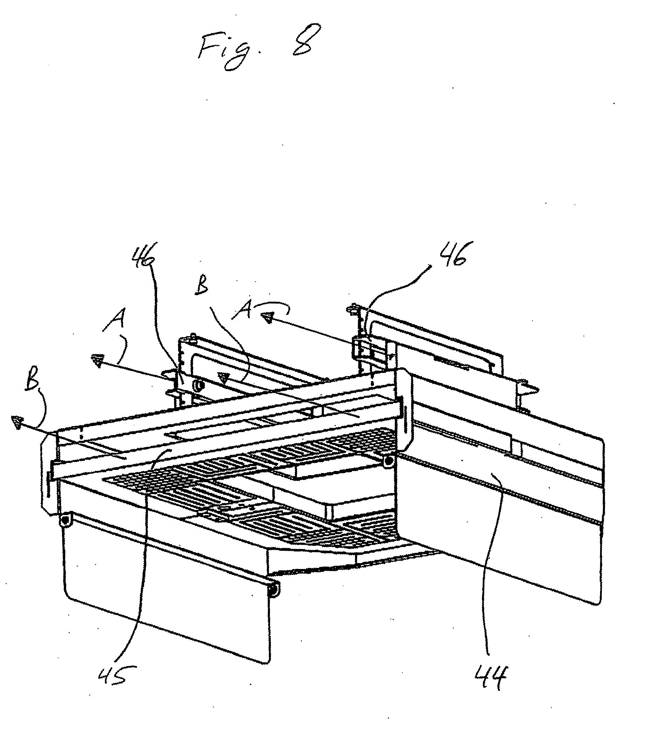

Wie in Fig. 5 dargestellt ist, ist in dem Bauraum 10 oberhalb der Bauebene 11 eine Heizvorrichtung 31 zum Heizen des Pulverbetts in dem Behälter 25 und insbesondere zum Vorwärmen einer aufgetragenen aber noch nicht verfestigten Schicht angeordnet. Die Heizvorrichtung 31 ist beispielsweise in Form eines oder einer Mehrzahl von Heizstrahlern, wie z.B. einem Infrarotstrahler, ausgebildet, der bzw. die derart oberhalb der Bauebene 11 angeordnet sind, dass die aufgetragene Schicht des Aufbaumaterials gleichmäßig erwärmt werden kann. Bei der dargestellten Ausführungsform ist die Heizvorrichtung 31 als ein Flächenstrahler ausgebildet, dessen Wärmeabstrahlelement durch eine Graphitplatte gebildet ist. Wie in Fig. 8 zu sehen ist, ist das Wärmeabstrahlelement mäanderartig strukturiert.

Bei der dargestellten Ausführungsform erstreckt sich die Heizeinrichtung 31 als im Wesentlichen quadratische Platte mit einer im Wesentlichen quadratischen Ausnehmung in ihrer Mitte unterhalb des Eintrittsfensters 12 um den Bereich herum, durch den der Strahl 9 von dem Scanner 8 zu der Bauebene 11 verläuft.

Die Befestigung der Heizvorrichtung 31 wird anhand von Fig. 8 beschrieben. Wie in Fig. 8 dargestellt ist, besteht die Heizvorrichtung 31 bei der Ausführungsform im Wesentlichen aus einer Halterung 44 und dem Heizstrahler 45. Die Halterung 44 ist in einer Aufnahme 46 aufgenommen, die in dem oberen Bereich 40 des Bauraums 10 angeordnet ist. Der Heizstrahler 45 ist in der Halterung 44 aufgenommen.

Wie in Fig. 8 schematisch durch Pfeile A dargestellt ist, kann die Halterung 44 gemeinsam mit dem Heizstrahler 45 aus der Aufnahme 46 entnommen werden. Die Aufnahme 46 ist in Form einer Schiene ausgebildet, in die die Halterung 44 eingeschoben ist. Die Halterung 44 kann werkzeugfrei in die Aufnahme 46 eingeführt und aus dieser herausgenommen werden. Es sind verschiedene Ausbildungen der Verbindung zwischen der Halterung 44 und der Aufnahme 46 möglich. Eine Befestigung kann z.B. über Federn, Klemmen oder ähnliches erfolgen. Es können Strukturen vorgesehen werden, bei denen die Halterung 44 in der Aufnahme 46 einrastet.

Die Halterung 44 weist ebenfalls eine schienenartige Struktur auf, in die der Heizstrahler 45 eingeschoben ist. Der Heizstrahler 45 kann werkzeugfrei in die Halterung 44 eingesetzt und aus der Halterung 44 entnommen werden. Es sind wiederum, wie bei der Verbindung zwischen der Halterung 44 und der Aufnahme 46, verschiedene Arten der Verbindung zwischen der Halterung 44 und dem Heizstrahler 45 möglich. Es kann vorgesehen werden, dass der Heizstrahler 45 in der Halterung 44 einrastet.

Die beschriebene Ausbildung der Aufnahme 46, der Halterung 44 und des Heizstrahlers 45 ermöglicht somit einerseits die Entnahme der Halterung 44 mit dem Heizstrahler 45 ohne Einsatz eines Werkzeugs. Dies ist insbesondere zur Reinigung des Bauraums 10 von Vorteil. Andererseits kann der Heizstrahler 45 werkzeugfrei aus der Halterung 44 entnommen werden. Dies ist insbesondere bei der Wartung und dem Austausch des Heizstrahlers 45 von Vorteil. Die werkzeugfreie Entnahme bzw. der werkzeuglose Austausch der Komponenten der Heizvorrichtung 31 ermöglichen eine schnelle und unkomplizierte Reinigung der Vorrichtung 1 und einen schnellen und unkomplizierten Austausch des Heizstrahlers 45. Dadurch kann bei Wartungs- und Reinigungsarbeiten Zeit gespart werden und die Vorrichtung 1 steht schneller wieder für den nächsten Arbeitsprozess bereit.

### Dosiervorrichtung

Wie in Fig. 5 schematisch dargestellt ist, sind die Dosiervorrichtungen 28 und 29 bei der dargestellten Ausführungsform jeweils als gewinkelte Platten ausgebildet, die sich in der Richtung senkrecht zu der Darstellungsebene von Fig. 5 über die gesamte Breite der Bauebene 11 erstrecken. Die Dosiervorrichtungen 28 und 29 sind um eine parallel zu der Bauebene 11 verlaufende Achse walzenartig drehbar und bilden jeweils eine Förderwalze. Die Dosiervorrichtungen 28, 29 sind dabei derart ausgebildet, dass sie durch die Bewegung des Beschichters 27 zu einer Drehung um einen definierten Winkel um ihre Achse angetrieben werden.

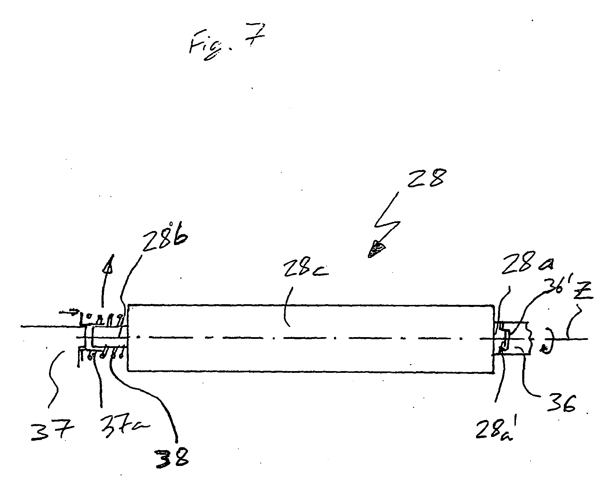

In Fig. 7 ist die Dosiervorrichtung 28 schematisch dargestellt. Die Dosiervorrichtung 29 ist ähnlich der Dosiervorrichtung 28 ausgebildet und wird nicht im Detail beschrieben. Die Dosiervorrichtung 28 ist werkzeugfrei aus der Vorrichtung 1 entnehmbar und wieder einsetzbar. Wie in Fig. 7 dargestellt ist, weist die Dosiervorrichtung 28 einen Mittelabschnitt 28c auf, der in Form einer abgewinkelten Platte ausgebildet ist und sich entlang der Drehachse Z erstreckt. Der Mittelabschnitt 28c dient dazu, eine definierte Menge an Aufbaumaterial zu dosieren. Ferner weist die Dosiervorrichtung 28 ein erstes Ende 28a auf, dass in der Richtung senkrecht zu der Drehachse Z einen kleineren Querschnitt als der Mittelabschnitt 28c hat. Ein zweites Ende 28b der Dosiervorrichtung 28 hat ebenfalls einen kleineren Querschnitt in der Richtung senkrecht zur Drehachse Z als der Mittelabschnitt 28c. Das erste Ende 28a der Dosiervorrichtung 28 ist mit einer Aufhängung 36 verbunden, um die bzw. mit der sich die Dosiervorrichtung 28 um die Drehachse Z dreht. Das erste Ende 28a und die Aufhängung 36 sind dazu in einer formschlüssigen Weise miteinander verbunden. Bei der gezeigten Ausführungsform weist das erste Ende 28a z.B. einen zylindrischen Vorsprung 28a' auf, der in eine ebenfalls zylindrische Ausnehmung 36' in der Aufhängung 36 formschlüssig eingesetzt ist. Die Aufhängung 36 und das erste Ende 28 können jedoch in einer anderen Weise ausgebildet sein. Z.B. kann das erste Ende 28a eine Ausnehmung aufweisen und die Aufhängung einen Vorsprung. Die Ausnehmung und der entsprechende Vorsprung können z.B. auch eine beliebige andere Formgebung aufweisen, die zu einer formschlüssigen Verbindung führt.

Das zweite Ende 28b der Dosiervorrichtung 28 ist mit einer Lagerung 37 verbunden. Das zweite Ende 28b ist durch die Lagerung 37 drehbar gelagert. In dem dargestellten Ausführungsbeispiel weist die Lagerung 37 einen kreisförmig vorspringenden Rand 37a auf der sich konzentrisch zu der Drehachse Z erstreckt. Das zweite Ende 28b ist als zylinderförmiger Vorsprung ausgebildet, der in die durch den kreisförmig vorspringenden Rand 37a gebildete Vertiefung eingesetzt ist. Es sind jedoch auch andere Gestaltungen der Lagerung 37 und des zweiten Endes 28b möglich. Z.B. kann die Lagerung 37 als ein vorspringender. Zapfen ausgebildet sein und das zweite Ende 28b eine Vertiefung aufweisen, in die der Zapfen eingreift. Es sind verschiedene Realisierungen möglich, die eine drehbare Lagerung der Dosiereinrichtung 28 ermöglichen.

Bei der dargestellten Ausführungsform ist ferner auf der Seite des zweiten Endes 28b zwischen der Dosiereinrichtung 28 und der Lagerung 37 ein Vorspannelement 38 vorgesehen, dass die Dosiereinrichtung 28 in Richtung der Aufhängung 36 vorspannt. In der Ausführungsform ist das Vorspannelement 38 durch eine Schraubenfeder gebildet, die koaxial zu der Drehachse Z über dem Rand 37a und dem zweiten Ende 28b vorgesehen ist. Es sind jedoch auch alternative Ausgestaltungen möglich. Z.B. kann das Vorspannelement auch in Form einer Blattfeder gebildet sein, das Vorspannelement kann in der Lagerung 37 oder in dem zweiten Ende 28b vorgesehen sein oder das zweite Ende 28b selbst kann durch das Vorspannelement beweglich an der Dosiereinrichtung 28 angebracht sein.

Bei der dargestellten Ausführungsform ist der Abstand der Lagerung 37 zu der Aufhängung 36 um einen vorbestimmten Abstand größer als die Länge der Dosiervorrichtung von dem ersten Ende 28a zu dem zweiten Ende 28b. Der vorbestimmte Abstand ist etwas größer als die Länge des Vorsprungs 28a' in der Richtung der Drehachse Z. Durch diese Ausbildung kann die Dosiervorrichtung 28 entgegen der vorspannenden Kraft der Vorspannelements 38 in Richtung der Lagerung 37 bewegt werden, sodass der formschlüssige Eingriff zwischen dem ersten Ende 28a und der Aufhängung 36 gelöst wird. Dann kann die Dosiervorrichtung 28 entnommen werden und z.B. gereinigt werden oder durch eine andere Dosiervorrichtung ersetzt werden. Das Einsetzen der Dosiervorrichtung 28 erfolgt mit den umgekehrten Verfahrensschritten.

Die beschriebene Ausbildung ermöglicht somit die Entnahme der Dosiervorrichtung 28 ohne Einsatz eines Werkzeugs. Die werkzeugfreie Entnahme bzw. der werkzeuglose Austausch der Dosiervorrichtung 28 ermöglichen eine schnelle und unkomplizierte Reinigung der Vorrichtung 1 und einen schnellen und unkomplizierten Austausch der Dosiervorrichtung 28. Dadurch kann bei Wartungs- und Reinigungsarbeiten Zeit gespart werden und die Vorrichtung 1 steht schneller wieder für den nächsten Arbeitsprozess bereit und die Betriebskosten der Vorrichtung 1 können gesenkt werden.

Alternativ können z.B. auch die Lagerung 37 und/oder die Aufhängung 36 als eine Antriebswelle ausgebildet sein, die die Dosiervorrichtung zu einer Drehung antreibt. In diesem Fall kann auch zwischen dem zweiten Ende 28b und der Lagerung eine formschlüssige Verbindung erfolgen.

Die Aufnahmen auf beiden Seiten der Dosiervorrichtung 28, in denen diese gehalten ist, können auch z.B. als Ausnehmungen ausgebildet sein, in die die Dosiervorrichtung 28 seitlich eingeschoben wird. Eine Befestigung kann z.B. über Federn, Klemmen oder ähnliches erfolgen. Es können Strukturen vorgesehen werden, bei denen die Dosiervorrichtung 28 in ihrer Halterung einrastet. Die Dosiervorrichtung 28 kann z.B. auch mit einer Rändelschraube befestigt werden, die von Hand gelöst und angezogen werden kann.

### Aufbaumaterialzufuhr/thermischer Schutz

Anhand der Fig. 5 wird der Bereich der Dosiervorrichtungen 28 und 29 in dem Bauraum 10 beschrieben.

Im Bereich der Dosiervorrichtung 29 ist ein Aufbaumaterialaufnahmebereich 23 gebildet, der sich unterhalb der Ebene erstreckt, in der sich die Bauebene 11 befindet. Der Aufbaumaterialaufnahmebereich 23 ist derart ausgebildet, dass er eine beschränkte Menge von Aufbaumaterial aufnehmen kann, die durch den Beschichter 27 zugeführt wird. Im Bereich der Dosiervorrichtung 29 und der Zufuhröffnung 30 ist ein Aufbaumaterialaufnahmebereich 24 gebildet. Der Aufbaumaterialaufnahmebereich 24 ist derart bemessen, dass durch die Zufuhröffnung 30 zugeführtes Aufbaumaterial und auch durch den Beschichter 27 zurückgeführtes Aufbaumaterial darin aufgenommen werden kann.

Die Abmessungen der Aufbaumaterialaufnahmebereiche 23 und 24 und der Dosiervorrichtungen 28 und 29 sind derart aufeinander abgestimmt, dass bei jeder Drehung um 180° der Dosiervorrichtung 28 bzw. 29 eine definierte Menge an Aufbaumaterial vor den Beschichter 27 bewegt wird.

Wie in Fig. 5 dargestellt ist, sind oberhalb der Dosiervorrichtungen 28 und 29 jeweils Strahlungsschutzschilde 32 und 33 angebracht. Die Strahlungsschutzschilde 32 und 33 verhindern, dass Wärmestrahlung von der Heizvorrichtung 31 direkt auf das Aufbaumaterial einwirkt, das sich im Bereich der Dosiervorrichtungen 28 und 29 und der Zufuhröffnung 30 in den Aufbaumaterialaufnahmebereichen 23 und 24 befindet.

Die Unterseite der Aufbaumaterialaufnahmebereiche 23 und 24 ist mit einer doppelwandigen Struktur versehen, durch die Hohlräume 34 und 35 gebildet werden. Die Hohlräume erstrecken sich über die gesamte Unterseite der Aufbaumaterialaufnahmebereiche 23 und 24. Durch diese doppelwandige Struktur werden die Aufbaumaterialaufnahmebereiche nach unten gegenüber den darunter befindlichen Komponenten der Vorrichtung 1 isoliert. Gemäß einer Ausführungsform kann durch die Hohlräume 34 und 35 ein Fluid zirkuliert werden, um die Temperatur des in den Aufbaumaterialaufnahmebereichen 23 und 24 befindlichen Aufbaumaterials einzustellen. Es kann ferner eine Regelungsvorrichtung vorgesehen werden, die die Durchflussrate des Fluids durch die Hohlräume 34 und 35 und/oder die Temperatur des Fluids regelt. Durch das Vorsehen einer solchen Regelungsvorrichtung kann die Temperatur des Aufbaumaterials gesteuert werden.

Durch das Vorsehen der Strahlungsschutzschilde 32 und 33 und der Hohlräume 34 und 35 kann die Temperatur des Aufbaumaterials im Bereich der Dosiervorrichtungen 28 und 29 und der Pulveraufnahmebereiche 23 und 24 auf einer geringeren Temperatur als der des Bauraums oberhalb der Bauebene 11 und der des Bereichs unterhalb des Behälters 25 gehalten werden.

Das Vorsehen der Hohlräume 34 und 35 und der Strahlungsschutzschilde 32 und 33 verhindert somit einen unerwünschten zu starken Anstieg der Temperatur des Aufbaumaterials in den Aufbaumaterialaufnahmebereichen 23, 24. Dadurch kann die Gefahr einer unerwünschten thermischen Beeinflussung der Eigenschaften des Aufbaumaterials vor dem Bauprozess verringert werden.

### Beschichtungssystem

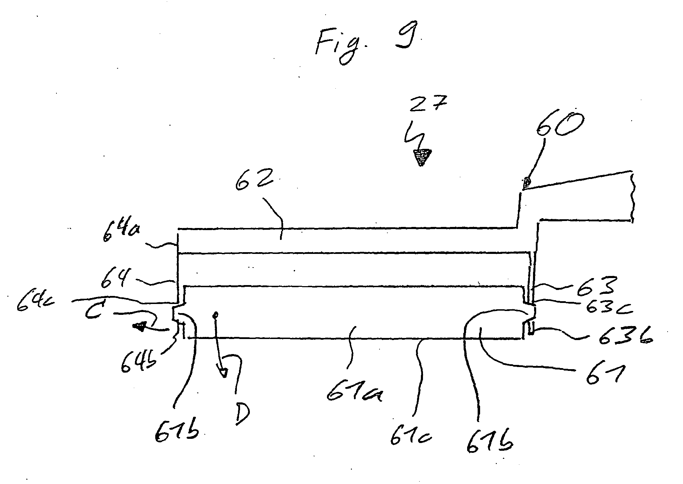

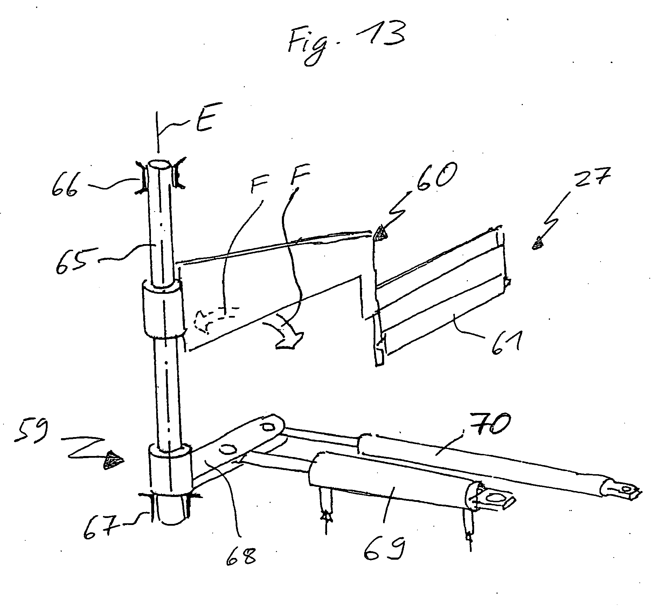

Das Beschichtungssystem bei der Ausführungsform wird im Folgenden anhand der Fig. 9 und 13 beschrieben.

Wie in Fig. 13 zu sehen ist, weist das Beschichtungssystem den Beschichter 27 und einen Antriebsmechanismus 59 auf. Der Beschichter 27 weist das Beschichterelement 61 und eine Halterung 60 auf. Das Beschichterelement 61 wird in der Halterung 60 gehalten. Die Halterung 60 ist mit dem Antriebsmechanismus 59 verbunden.

Wie in Fig. 9 zu sehen ist, weist die Halterung 60 einen Hauptarm 62 und zwei sich von diesem vertikal nach unten erstreckende Halterungsarme, einen ersten Halterungsarm 63 und einen zweiten Halterungsarm 64, auf. Der erste Halterungsarm 63 ist starr ausgebildet und ist fest mit dem Hauptarm 62 verbunden. Der zweite Halterungsarm 64 ist an seinem einen Ende 64a fest mit dem Hauptarm 62 verbunden. Der zweite Halterungsarm 64 weist eine Flexibilität auf, sodass dessen freies Ende 64b entgegen einer rücktreibenden Kraft des Materials des zweiten Halterungsarms 64 in einem beschränkten Maß bewegt werden kann, wie durch den Pfeil C in Fig. 9 angedeutet ist. Durch diese Bewegung kann der Abstand der freien Enden 63b, 64b der Halterungsarme 63, 64 vergrößert werden. In den Halterungsarmen 63 und 64 ist jeweils eine Ausnehmung 63c bzw. 64c vorgesehen.

Das Beschichterelement 61 weist einen Hauptkörper 61a auf, der sich im Wesentlichen parallel zu dem Hauptarm 62 der Halterung 60 erstreckt, und zwei Vorsprünge 61b, die seitlich von dem Hauptkörper 61a vorstehen. Die zwei Vorsprünge 61b sind derart bemessen, dass sie in die Ausnehmungen 63c und 64c der Halterungsarme 63 und 64 formschlüssig einsetzbar sind. Der formschlüssige Eingriff bewirkt eine drehfeste Verbindung zwischen dem Beschichterelement 61 und der Halterung 60. Bei der dargestellten Ausführungsform ist das Beschichterelement 61 als eine Beschichterklinge ausgebildet, deren Unterkante 61c den Auftrag und ein Glätten des Aufbaumaterials bewirkt.

Wie in Fig. 9 schematisch durch die Pfeile C und D dargestellt ist, kann das freie Ende 64b in Richtung des Pfeils C von dem freien Ende 63b wegbewegt werden, sodass der formschlüssige Eingriff zwischen dem Beschichterelement 61 und dem zweiten Halterungsarm 64 gelöst wird. Dann kann das Beschichterelement 61 von der Halterung 60 entnommen werden, wie durch den Pfeil D angedeutet ist.

Ein Befestigen des Beschichterelements 61 an der Halterung 60 erfolgt in der umgekehrten Reihenfolge.

Durch die beschriebene Ausbildung kann das Beschichterelement 61 werkzeugfrei, d.h. ohne Einsatz eines Werkzeugs, von der Halterung 60 gelöst und an der Halterung 60 befestigt werden. Dadurch wird ein schneller und effizienter Wechsel des Beschichterelements 61 ermöglicht. Es kann bei Wartungs- und Reinigungsarbeiten Zeit gespart werden und die Vorrichtung 1 steht schneller wieder für den nächsten Arbeitsprozess bereit. Insbesondere können für aufeinander folgende Bauprozesse entsprechend den jeweiligen Anforderungen verschiedene Beschichterelemente 61 verwendet werden und diese zwischen den Bauprozessen mit wenig Arbeitsaufwand gewechselt werden.

Es sind andere Strukturen zur Verbindung des Beschichterelements 61 mit der Halterung 60 möglich. Z.B. können auch Ausnehmungen an dem Beschichterelement 61 und Vorsprünge an der Halterung 60 zur formschlüssigen Verbindung vorgesehen werden. Es kann z.B. auch ein Einschieben in eine Rille und eventuell ein Einrasten zwischen dem Beschichterelement 61 und der Halterung 60 vorgesehen werden.

Der Antriebsmechanismus 59 des Beschichters 27 wird anhand von Fig. 13 beschrieben. Wie in Fig. 13 zu sehen ist, ist die Halterung 60 des Beschichters 27 drehfest mit einer Antriebswelle 65 verbunden. Die Antriebswelle 65 ist an ihren Enden in Lagern 66 und 67 drehbar gelagert. Die Antriebswelle 65 ist um eine Achse E drehbar, die senkrecht zu der Bauebene 11 verläuft, die in Fig. 5 dargestellt ist. Die Drehung ist durch die Pfeile F in Fig. 13 angedeutet. An der Antriebswelle 65 ist ferner ein Hebel 68 drehfest angebracht. Der Hebel 68 ist mit einem Antriebs-Kolben-Zylinder-System 69 verbunden. Der Hebel 68 ist ferner mit einem Brems-Kolben-Zylinder-System 70 verbunden. Das Antriebs-Kolben-Zylinder-System 69 ist bei der Ausführungsform als Pneumatiksystem ausgebildet, dass bei Beaufschlagung des Kolbens mit Druck über den Hebel 68 die Antriebswelle 65 zu einer Drehung um die Achse E antreibt. Die Drehung der Antriebswelle 65 hat eine Drehung der Halterung 60 zur Folge, sodass das Beschichterelement 61 parallel zu der Bauebene 11 in Bewegung versetzt wird. Die Antriebswelle 65 ist seitlich des Baufeldes, in dem das Verfestigen des Aufbaumaterials erfolgt, in dem hinteren Bereich des Bauraums angeordnet. Über den Antriebsmechanismus 59 ist der Beschichter 27 über einen begrenzten Winkelbereich auf einer Bahn bewegbar, die einem Kreisausschnitt entspricht. Der Beschichter 27 wird somit auf der Kreisbahn zwischen einer ersten Position auf einer Seite des Baufeldes und einer zweiten Position auf der gegenüberliegenden Seite des Baufeldes hin und herbewegt. Aufgrund dieser Ausbildung ist der Antriebsmechanismus 59 für die Bewegung des Beschichters 27 im Wesentlichen auf einer Seite des Baufeldes angeordnet und ein freier Zugriff auf das Baufeld von der gegenüberliegenden Seite ist sichergestellt. Durch das Vorsehen des Pneumatiksystems als Antrieb kann die Beschichterbewegung gleichzeitig mit hoher Präzision und kostengünstig realisiert werden.

Das Brems-Kolben-Zylinder-System 70 ist als ein Ölbremszylinder ausgebildet. Das Brems-Kolben-Zylindersystem 70 bewirkt, dass Druckänderungen in der Beaufschlagung des Antriebs-Kolben-Zylinder-Systems 69 oder Änderungen der dem Antrieb entgegenwirkenden Widerstandskraft, die eine ruckartige Geschwindigkeitsänderung des Beschichters 27 bewirken würden, abgedämpft werden. Es wird somit eine gleichförmige Bewegung des Beschichters 27 mit einem vorbestimmten Geschwindigkeitsprofil ermöglicht. Die optimierte Bewegung des Beschichters 27 führt zu einem verbesserten gleichmäßigen Schichtauftrag und somit zu einer Verbesserung der Bauteilqualität.

In der Ausführungsform wird ein Beschichter 27 beschrieben, der sich auf einer Kreisbahn um die Achse E parallel zu der Bauebene 11 bewegt. Die Kreisbahn ist so bemessen, dass der Beschichter 27 eine Bewegung über die gesamte Bauebene 11 durchführt. Der Beschichter kann auch derart ausgebildet sein, dass eine lineare Bewegung über die Bauebene 11 realisiert ist. In diesem Fall führt die Kombination des Antriebs-Kolben-Zylinder-Systems 69 mit dem Brems-Kolben-Zylinder-System 70 ebenfalls zu einer gleichförmigeren Bewegung des Beschichters und somit zu einem verbesserten Schichtauftrag.

### Wechselbehälter/Aufhängung

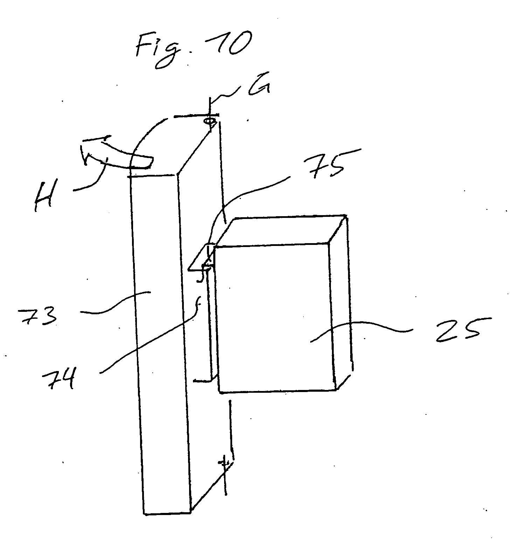

Die Ausgestaltung der Behälters 25 bei der Ausführungsform wird anhand der Fig. 5 und 10 beschrieben. In Fig. 5 ist der Behälter 25 mit der darin angeordneten Trägervorrichtung 26 nur schematisch dargestellt.

Bei der Ausführungsform ist der Behälter 25 als ein Wechselbehälter ausgebildet, der gemeinsam mit der darin befindlichen Trägervorrichtung 26, die eine Bauplattform bildet, aus der Vorrichtung 1 entnehmbar ist. In der Vorrichtung 1 ist ein nicht dargestellter Kopplungsmechanismus vorgesehen, mit dem die Verbindung der Trägervorrichtung 26 und des Behälters 25 zu dem Antrieb für die vertikale Bewegung der Trägervorrichtung 26 gebildet und gelöst werden kann. Dieser Kopplungsmechanismus wird durch eine Steuerung der Vorrichtung 1 angesteuert. Der Kopplungsmechanismus kann ähnlich dem ausgebildet werden, der in dem in der Einleitung genannten Stand der Technik beschrieben ist.

Wie in Fig. 10 schematisch dargestellt ist, ist an einer Tür 73 eine Halterung 74 vorgesehen. Die Tür 73 ist an dem Maschinenrahmen der Vorrichtung 1 schwenkbar befestigt und verschließt in geschlossenem Zustand den Bauraum 10 der Vorrichtung 1 gegenüber der Außenseite der Vorrichtung 1. Bei der Ausführungsform ist die Tür 73 an einer Seite derart gelagert, dass sie um eine Achse G geschwenkt werden kann, wie durch den Pfeil H angedeutet ist. Die Achse G verläuft bei der dargestellten Ausführungsform vertikal, sodass die Tür 73 von der Vorrichtung 1 seitlich aufschwenkt.

Der Behälter 25 weist an einer Seite eine Befestigung 75 auf. Die Befestigung 75 kann mit der Halterung 74 in der Tür 73 in Eingriff gebracht werden, dass sich der Behälter 25 an der Tür 73 abstützt und zusammen mit der Tür 73 von dem Maschinenrahmen aufgeschwenkt werden kann. In der dargestellten Ausführungsform ist die Halterung 74 auf der Innenseite der Tür 73 als ein Vorsprung ausgebildet, der an seiner Oberseite eine Ausnehmung hat. Die Befestigung 75 an dem Behälter 25 ist als ein vorspringender Haken ausgebildet, der in die Ausnehmung eingreift.

Zum Einsetzen des Behälters 25 in die Vorrichtung 1 wird die Befestigung 75 des Behälters 25 bei geöffneter Tür 73 mit der Halterung 74 in Eingriff gebracht. Dieser Vorgang kann in bequemer Weise erfolgen, da die Halterung 74 bei geöffneter Tür 73 leicht von der Außenseite der Vorrichtung 1 zugänglich ist. Beim Schließen der Tür 73 wird der Behälter 25 in den Bauraum 10 bewegt. Der Behälter 25 wird durch die Steuerung der Vorrichtung 1 über den Kopplungsmechanismus von der Halterung 74 der Tür gelöst. Die Trägervorrichtung 26 wird mit dem zugehörigen Antrieb verbunden.

In diesem Zustand ist der Behälter 25 nicht mit der Tür 73 verbunden und die Tür 73 kann bei Bedarf geöffnet werden, ohne dabei den Behälter 25 aus der Vorrichtung 1 zu entnehmen. Andererseits kann der Behälter 25 durch die Steuerung der Vorrichtung 1 wieder mit der Halterung 74 in Eingriff gebracht werden und die Trägervorrichtung 26 von dem zugehörigen Antrieb gelöst werden. In diesem Zustand kann der Behälter 25 durch Öffnen der Tür 73 aus dem Bauraum 10 und aus der Vorrichtung 1 herausbewegt werden. Der. Behälter 25 schwenkt mit der Tür 73 heraus. In dieser Position kann der Behälter 25 bequem von der Vorrichtung entnommen werden, ohne dass ein Eingreifen in das Innere der Maschine erforderlich ist.

Obwohl die Tür 73 bei der Ausführungsform um eine vertikale Achse geschwenkt wird, ist es z.B. auch möglich, eine Tür vorzusehen, die andersartig in der Horizontalen öffnet. Ferner ist die Verbindung der Tür 73 mit dem Behälter 25 nicht auf die beschriebene Ausführung mit einer Ausnehmung und einem eingreifenden Haken beschränkt. Es können auch andere Mechanismen vorgesehen werden, die ermöglichen, dass die Tür 73 und der Behälter 25 in Eingriff gelangen.

### Bauplattformdichtung

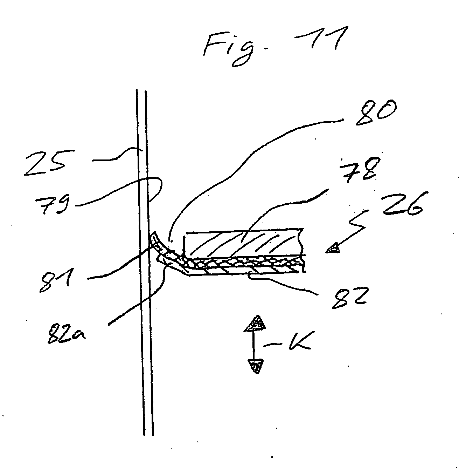

Anhand von Fig. 11 wird die Führung der Trägervorrichtung 26 in dem Behälter 25 beschrieben. Wie bereits anhand von Fig. 5 beschrieben wurde, ist die Trägervorrichtung 26 über einen Antrieb in der vertikalen Richtung K relativ zu dem Behälter 25 bewegbar. Die Oberseite der Trägervorrichtung 26 bildet die Bauplattform 78, auf der das zu bildende dreidimensionale Objekt schichtweise erzeugt wird. Zwischen der Bauplattform 78 und der Innenwand 79 des Behälters 25 befindet sich ein Spalt 80, der derart bemessen ist, dass die Trägervorrichtung 26 in dem Behälter 25 in der vertikalen Richtung verschiebbar ist. Es besteht die Gefahr, dass das Aufbaumaterial durch den Spalt 80 von dem Bereich der Bauplattform 78 in den Bereich in dem Behälter 25 unterhalb der Bauplattform 78 gelangt. Das Hindurchtreten des Aufbaumaterials ist jedoch unerwünscht, da eine Verschmutzung des Antriebs auftreten kann und als Folge Wartungstätigkeiten erforderlich werden.

Um das Hindurchtreten von Aufbaumaterial zu verhindern ist der Spalt 80 durch eine Dichtung 81 verschlossen, die im Folgenden beschrieben wird. Die Dichtung 81 wird durch eine Lage aus einem flexiblen Material gebildet, die ringförmig entlang des Randes der Bauplattform 78 unterhalb der Bauplattform 78 angeordnet ist. Die Dichtung 81 ist zum Beispiel aus einem flachen Streifen eines Silikonmaterials gefertigt. Es sind jedoch auch andere Materialien möglich, die eine ausreichende Temperaturbeständigkeit und Flexibilität aufweisen. Die Dichtung 81 hat in einem flachen Zustand in der Ebene senkrecht zu der Verschieberichtung K ein Außenmaß, das etwas größer als das Innenmaß des Behälters 25 ist. Die Dichtung 81 ist somit im eingesetzten Zustand in dem Behälter 25 im Bereich des Spaltes 80 leicht abgewinkelt und liegt aufgrund der Flexibilität ihres Materials an der Innenwand 79 des Behälters 25 unter einer leichten Spannung an.

Unterhalb der Dichtung 81 ist unter der Bauplattform 78 eine Führungsplatte 82 angeordnet, die in der Ebene senkrecht zu der Verschieberichtung K ein etwas größeres Außenmaß als die Bauplattform 78 hat. Der umlaufende Außenrand 82a der Führungsplatte 82 ist in Richtung des Spaltes 80 abgewinkelt. Der Außenrand 82a liegt an der Dichtung 81 in dem Bereich des Spaltes 80 an. Der Außenrand 82a biegt die Dichtung 81 im Bereich ihres Außenumfangs um, sodass deren Rand im Spalt in Richtung zur oberen Raumbegrenzung abgewinkelt ist. Selbst wenn die Bauplattform 78 in der Richtung entgegen der Biegerichtung des abgewinkelten Randbereichs der Dichtung 81 bewegt wird, verhindert die Führungsplatte 82, dass die flexible Dichtung 81 in ihrem Randbereich entgegen der vorgeformten Richtung umklappt. Somit wird sichergestellt, dass die Trägervorrichtung 26 mit der Bauplattform 78 zuverlässig in der Verschieberichtung K relativ zu dem Behälter 25 verschiebbar ist. Ferner wird ein Durchtreten von Partikeln des Aufbaumaterials in den Bereich unterhalb der Bauplattform 78, das bei einem Umklappen der Dichtung auftreten könnte, verhindert.

Die Führungsplatte 82 mit dem abgewinkelten Randbereich 82a hat ferner den Effekt, dass als Dichtung 81 eine ebene Platte aus z.B. Silikon verwendet werden kann. Die Dichtung 81 kann z.B. auch aus einem anderen Kunststoff gefertigt sein. Aufgrund dieser Realisierung braucht die Dichtung an ihrem Außenrand in Umfangsrichtung keine spezielle an die exakte Dimension des Innendurchmessers des Behälter angepasste Struktur oder Formgebung aufzuweisen.

### Temperierung des Behälters

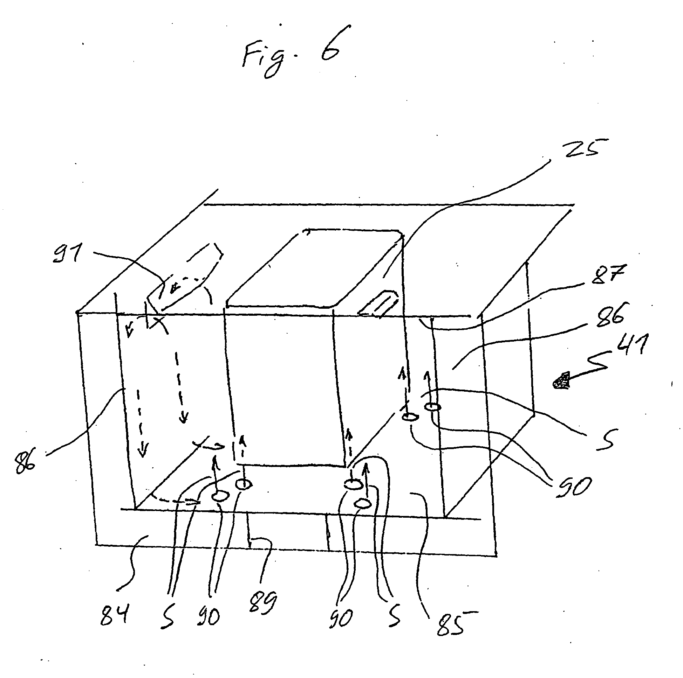

Anhand der Fig. 5 und 6 wird der untere Bereich 41 des Bauraums 10 beschrieben. Wie in Fig. 5 zu sehen ist, ist in dem unteren Bereich 41 eine Kammer 85 gebildet, die die Unterseite des Behälters 25 umgibt. Die Kammer 85 ist bei dem Betrieb der Vorrichtung 1 mit einem fluiden Medium gefüllt. Bei der Ausführungsform ist das fluide Medium ein Gas. Insbesondere ist in einer Ausführungsform dieses Gas ein Inertgas, das auch in dem oberen Bereich 40 verwendet wird, um Verschlechterung des Baumaterials durch z.B. Oxidation zu verhindern.

Die Kammer 85 ist an ihren Seiten durch Seitenwände 86 begrenzt und nach oben auf Höhe der Bauebene 11 durch eine Trennplatte 87 von dem oberen Bereich 40 des Bauraums 10 getrennt. Nach unten ist die Kammer 85 durch einen Boden 88 begrenzt. Der Boden 88 weist in dem Bereich unterhalb des Behälters 25 einen Durchgang 89 für eine Verbindung der Trägervorrichtung 26 mit deren Antrieb auf. In dem Boden 88 sind in einem Bereich unterhalb der Ecken des Behälters 25 Austrittsöffnungen 90 vorgesehen. Bei der dargestellten Ausführungsform sind unter jeder Ecke des Behälters 25 jeweils zwei Austrittsöffnungen 90 vorgesehen. Es kann jedoch auch eine andere Anzahl an Austrittsöffnungen vorgesehen werden, z.B. kann pro Ecke auch nur eine Austrittsöffnung vorgesehen werden.

In den Seitenwänden 86 sind im oberen Bereich ferner Öffnungen 91 vorgesehen, wie in Fig. 5 zu sehen ist. Die Öffnungen 91 sind über ein Ventilationssystem mit den Austrittsöffnungen 90 verbunden. Das Ventilationssystem ist bei der Ausführungsform außerhalb der Kammer 85 angeordnet und durch eine außerhalb der Seitenwände 86 und unterhalb des Bodens 88 verlaufende zweite Kammer 84 gebildet. In dem Ventilationssystem befindet sich ein Ventilator 92. Ferner sind in dem Ventilationssystem eine Heizvorrichtung 93 und ein Temperatursensor vorgesehen. Durch den Ventilator 92 wird das in dem unteren Bereich 41 befindliche fluide Medium durch die Öffnungen 91 in die zweite Kammer 84 eingesaugt und gerichtet durch die Austrittsöffnungen 90 wieder in die Kammer 85 eingeströmt. Aufgrund der Anordnung der Austrittsöffnungen 90 unterhalb der Ecken des Behälters 25 und der Öffnungen 91 in den Seitenwänden 86 wird im Bereich der Ecken des Behälters 25 ein gerichteter Strom erzeugt, der einen Temperaturausgleich des Behälters 25 bewirkt. Dieser Strom ist durch die Pfeile S in den Fig. 5 und 6 angedeutet. Durch diesen Strom kann das Temperaturprofil des Behälters 25 bestimmt werden und eine gleichmäßige Temperierung des Behälters 25 ist möglich. Das Vorsehen der Heizvorrichtung 93 und des Temperatursensors ermöglicht ein genaues Einstellen der Temperatur dieses Stroms. Somit kann die Temperatur des Behälters 25 und des darin befindlichen Baumaterials während des Betriebs der Vorrichtung 1 in definierter Weise eingestellt werden. Der Strom bewirkt einen Wärmeaustausch des fluiden Mediums mit dem Behälter 25 insbesondere in dessen Ecken. Ausgehend von den Ecken kann in vorteilhafter Weise das Temperaturprofil des Behälters 25 besonders homogen gehalten werden.

Durch das gezielte Temperieren der Behälterecken durch den gerichteten Strom kann eine kontrollierte Abkühlung des verfestigten und des umgebenden nichtverfestigten Baumaterials in dem Behälter 25 während des Betriebs erfolgen. Es können dadurch beim Abkühlen des Baumaterials solche extremen Temperaturgradienten verhindert werden, die zu einer Verschlechterung der gefertigten dreidimensionalen Objekte durch Verformung während des Abkühlens führen würden.

Bei der Ausführungsform wird als das fluide Medium dasselbe Prozessgas verwendet, das auch in dem oberen Bereich 40, dem eigentlichen Baubereich, des Bauraums 10 verwendet wird. Es braucht somit zwischen dem oberen Bereich 40 und dem unteren Bereich 41 des Bauraums 10 nicht besonders abgedichtet werden. Es wird somit eine kostengünstigere Konstruktion der Vorrichtung 1 ermöglicht. Ferner wird auch eine thermische Alterung des Aufbaumaterials in dem Behälter 25 in einem höheren Maß verhindert. Dies ist auch insbesondere im Hinblick auf die Wiederverwertung des nichtverfestigten Aufbaumaterials in einem weiteren Bauprozess vorteilhaft.

### Aufbaumaterialzuführung

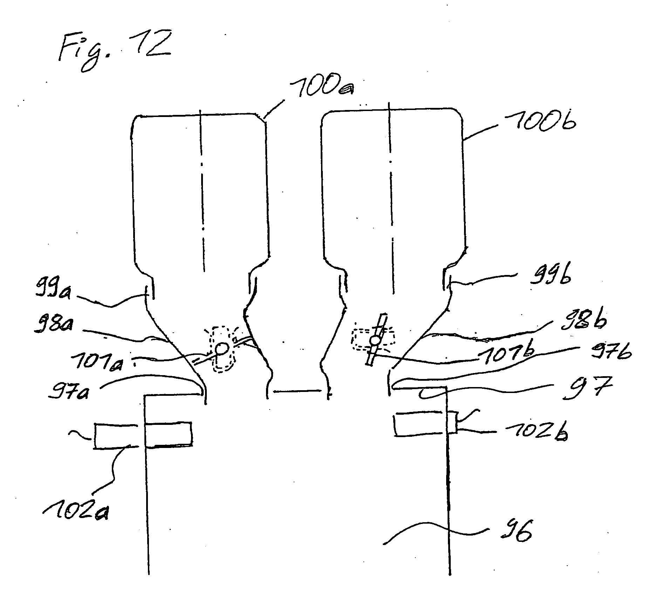

Die Zuführung des Aufbaumaterials zu der Vorrichtung 1 wird anhand von den Fig. 1, 12 und 15 beschrieben. Wie in Fig. 1 zu sehen ist, ist in dem hinteren Bereich der Vorrichtung 1 eine Öffnung 95 zum Zuführen von Aufbaumaterial gebildet. Die Öffnung 95 ist mit der in Fig. 5 dargestellten Zufuhröffnung 30 verbunden, die in den Bauraum 10 mündet. In dem Bereich der Öffnung 95 ist in der Vorrichtung 1 ein Schacht 96 gebildet, über den das Aufbaumaterial zu der Zufuhröffnung 30 zugeführt wird. Die Zuführung erfolgt bei der Ausführungsform aufgrund des Eigengewichts des Aufbaumaterials durch Schwerkraftförderung. Der obere Bereich des Schachts 96 ist in Fig. 12 schematisch dargestellt.

Der Schacht 96 weist an seiner Oberseite eine Abdeckwand 97 auf, in der zwei Öffnungen 97a und 97b zur Verbindung mit Einfüllrohren 98a und 98b zur Aufbaumaterialzufuhr vorgesehen sind. Die Einfüllrohre 98a und 98b weisen an ihrer Oberseite Anschlüsse 99a, 99b für Aufbaumaterialzufuhrbehälter 100a und 100b auf. Die Anschlüsse 99a und 99b sind mit den Aufbaumaterialszufuhrbehältern 100a und 100b separat verbindbar. In den Einfüllrohren 98a, 98b ist jeweils ein Verschluss 101a, 101b vorgesehen. Die Verschlüsse 101a, 101b können jeweils in eine erste Stellung bewegt werden, bei der der Querschnitt des zugehörigen Einfüllrohres 98a bzw. 98b verschlossen ist, wie in Fig. 12 links dargestellt ist. Die Verschlüsse 101a, 101b können auch in eine zweite Stellung bewegt werden, in der der Querschnitt des Einfüllrohres 98a bzw. 98b unverschlossen ist und Aufbaumaterial von dem Aufbaumaterialzufuhrbehälter 100a bzw. 100b zu dem Schacht 96 durchtreten kann.

In dem Schacht 96 sind unterhalb der Öffnungen 97a und 97b jeweils Füllstandsdetektoren 102a und 102b angebracht. Der Füllstandsdetektor 102a detektiert, ob sich unter dem Einfüllrohr 98a in dem Schacht 96 Aufbaumaterial befindet. Der Füllstandsdetektor 102b detektiert, ob sich unter dem Einfüllrohr 98b in dem Schacht Aufbaumaterial befindet.

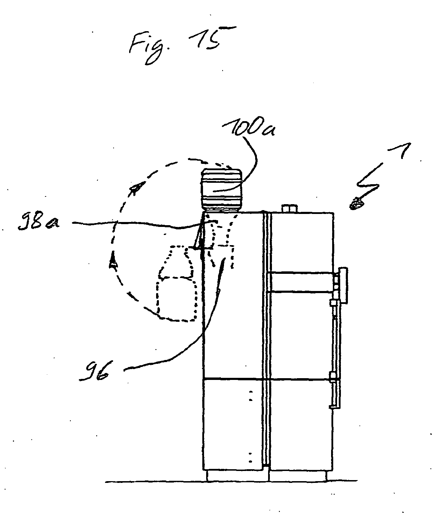

Die Einfüllrohre 98a und 98b sind jeweils mit einem Mechanismus versehen, mit dem diese zusammen mit einem daran befestigten Aufbaumaterialzufuhrbehälter 100a bzw. 100b über den Schacht 96 bewegt werden können bzw. von diesem wegbewegt werden können, wie in Fig. 15 schematisch dargestellt ist. Die Bewegung kann für beide Einfüllrohre getrennt voneinander erfolgen. Bei der Ausführungsform erfolgt diese Bewegung als Schwenkung um eine im Wesentlichen horizontal verlaufende Achse.

Im Betrieb ist der Schacht 96 zunächst mit Aufbaumaterial gefüllt. Ein Aufbaumaterialzufuhrbehälter 100b ist ebenfalls mit Aufbaumaterial gefüllt und der zugehörige Verschluss 101 befindet sich in der geöffneten Stellung. Eine Materialsäule des Aufbaumaterials erstreckt sich in dem Schacht 96 bis oberhalb des zugehörigen Füllstandsdetektors 102b. Der zweite Aufbaumaterialzufuhrbehälter 100a ist ebenfalls mit Aufbaumaterial gefüllt, der zugehörige Verschluss befindet sich jedoch noch in der geschlossen Stellung, wie in Fig. 12 dargestellt ist.

Bei dem Betrieb der Vorrichtung 1 wird Aufbaumaterial verbraucht und der Füllstand in dem Schacht 96 sinkt ab, da das Aufbaumaterial aufgrund seines Gewichts über die Zufuhröffnung 30 zu dem Bauraum 10 zugeführt wird. Solange in dem Aufbaumaterialzufuhrbehälter 100b Aufbaumaterial vorhanden ist, rutscht dieses in den Schacht 96 nach. Wenn der Aufbaumaterialzufuhrbehälter 100b leer ist, sinkt bei weiterem Betrieb der Vorrichtung 1 der Füllstand in dem Schacht 96 auf der Seite des Füllstandsdetektors 102b ab. Dann detektiert der Füllstandsdetektor 102b, dass der Aufbaumaterialzufuhrbehälter 100b leer ist. Anschließend wird der Verschluss 101 in dem Einfüllrohr 98b geschlossen. Der Verschluss 101 in dem anderen Einfüllrohr 98a wird geöffnet, sodass Aufbaumaterial aus dem anderen Aufbaumaterialzufuhrbehälter 100a zu dem Schacht 96 zugeführt wird.

In dieser Stellung kann der Aufbaumaterialzufuhrbehälter 100b von der Vorrichtung 1 entnommen und befüllt oder durch einen anderen befüllten Aufbaumaterialzufuhrbehälter ausgetauscht werden. Der Anschluss 99a bzw. 99b kann z.B. als ein Innengewinde in dem Einfüllrohr 98a bzw. 98b ausgebildet sein, in das ein entsprechendes Außengewinde an dem Aufbaumaterialzufuhrbehälter 100a, 100b eingeschraubt wird. Dies ermöglicht die Verwendung von im Handel erhältlichen Behältern als Aufbaumaterialzufuhrbehälter. Der befüllte bzw. ausgetauschte Aufbaumaterialzufuhrbehälter kann wieder mit dem Einfüllrohr 98b verbunden und über den Schacht 96 bewegt werden, sodass er bereit steht, wenn der andere Aufbaumaterialzufuhrbehälter 100a leer ist.

Wenn der Aufbaumaterialzufuhrbehälter 100a leer ist, sinkt der Füllstand in dem Schacht 96 ab und der Füllstandsdetektor 102a detektiert das Absinken und gibt ein Signal an die Steuerung der Vorrichtung 1 aus, die anzeigt, dass der Aufbaumaterialzufuhrbehälter leer ist. Anschließend kann der Verschluss 101 in dem Einfüllrohr 98a geschlossen werden und der Verschluss 101 in dem Einfüllohr 98b kann geöffnet werden, sodass wieder Aufbaumaterial aus dem Aufbaumaterialzufuhrbehälter 100b zugeführt wird. Das Schließen und Öffnen der Verschlüsse 101 kann durch die Steuerung der Vorrichtung 1 erfolgen. Der Aufbaumaterialzufuhrbehälter 100a kann dann ausgetauscht werden.

Es sind zwei Aufbaumaterialzufuhrbehälter 100a und 100b vorgesehen, die unabhängig voneinander über unabhängige Anschlüsse 99a und 99b mit der Vorrichtung 1 verbunden werden können. Der Betrieb der Vorrichtung 1 muss nicht unterbrochen werden, wenn ein Aufbaumaterialzufuhrbehälter 100a bzw. 100b ausgetauscht wird. Der Austausch der Aufbaumaterialzufuhrbehälter kann bei laufendem Bauprozess erfolgen, wenn ein dreidimensionales Objekt in dem Bauraum 10 erzeugt wird. Es wird ein effizienter Betrieb der Vorrichtung 1 erzielt und Ruhezeiten, in denen keine Bauprozesse stattfinden können, können reduziert werden. Die Vorrichtung 1 kann einfacher bedient werden. Während des Betriebs kann stets ein Aufbaumaterialzufuhrbehälter gefüllt gehalten werden.

Es kann ferner ein Deckel zum Verschließen der Aufbaumaterialzufuhrbehälter 100a, 100b vorgesehen sein. Dann können die Aufbaumaterialzufuhrbehälter vor der Zuführung zu der Vorrichtung 1 und nach der Entnahme verschlossen werden.

Durch die Ausbildung der Einfüllrohre 98a, 98b mit Anschlüssen 99a, 99b für die Aufbaumaterialzufuhrbehälter 100a, 100b können bei der Vorrichtung Aufbaumaterialzufuhrbehälter verwendet werden, die auch zur Lagerung und zum Mischen von Aufbaumaterial geeignet sind. Je nach Ausbildung des Anschlusses können im Handel erhältliche Behälter verwendet werden.

Es können ferner auch mehrere Aufbaumaterialzufuhrbehälter für z.B. unterschiedliches Aufbaumaterial oder auch zur Lagerung von Aufbaumaterial vorgesehen sein. Insbesondere können mehrere Aufbaumaterialzufuhrbehälter so eingesetzt werden, das ein Betrieb der Vorrichtung 1 mit zwei Aufbaumaterialzufuhrbehältern erfolgt und gleichzeitig in weiteren Aufbaumaterialzufuhrbehältern ein Mischen von Aufbaumaterial durchgeführt wird. Die Vorrichtung 1 kann ferner auch mit einem oder mehr als zwei Anschlüssen für Aufbaumaterialzufuhrbehälter versehen sein.

In einer Ausführungsform ist die Steuerung der Vorrichtung 1 so ausgebildet, dass die Füllstandsinformation durch die Füllstandsdetektoren 102a, 102b automatisch elektronisch an die bedienenden Personen versandt wird. Eine Versendung kann z.B. per SMS oder E-Mail erfolgen. Dazu weist die Vorrichtung 1 einen geeigneten Netzwerkanschluss auf.

Es wurde beschrieben, dass die Zuführung des Aufbaumaterials durch Ausnutzung des Eigengewichts des Aufbaumaterials erfolgt. Die Zuführung kann jedoch auch in anderer Weise erfolgen. Es kann z.B. für die Aufbaumaterialzufuhrbehälter eine mechanische Einrichtung vorgesehen werden, die die Zufuhr des Aufbaumaterials zu dem Schacht unterstützt. Z.B. ist eine Vibrationsvorrichtung möglich, die die Aufbaumaterialzufuhrbehälter 100a, 100b bzw. das darin befindliche Aufbaumaterial in Vibration versetzt, um die Zuführung des Aufbaumaterials zu dem Schacht 96 zu unterstützen. Die Vibrationsvorrichtung kann z.B. durch einen oder mehrere an den Einfüllrohren 98a, 98b (Einfüllabschnitten) angeordnete mechanische Vibrationserreger gebildet werden.

### Abwandlungen

Es sind Abwandlungen der beschriebenen Vorrichtung möglich. Es kann statt eines Lasers eine andere Energiequelle, wie z.B. eine andere Lichtquelle oder z.B. auch eine Elektronenquelle oder eine andere Teilchenquelle verwendet werden. Je nach Energiequelle können auch andere Optiksysteme verwendet werden. In dem Fall einer Elektronenquelle als Energiequelle kann z.B. einelektromagnetisches Linsen- und Ablenksystem verwendet werden.

Einige der beschriebenen Merkmale, wie z.B. die Ausbildung des Rahmensystems, können auch z.B. bei Vorrichtungen zum 3D-Drucken mit einem dem Tintenstrahldrucken ähnlichen Verfahren oder bei Maskenbelichtungsverfahren realisiert werden.

Auch bei der Verwendung eines Lasers als Energiequelle kann die Vorrichtung z.B. zur Verwendung bei einem Lasersinterverfahren oder zur Verwendung bei einem Laserschmelzverfahren, bei dem das Aufbaumaterial lokal aufgeschmolzen wird, ausgebildet werden.

Als Aufbaumaterial ist eine Vielzahl von Materialien möglich. Es kann z.B. ein Kunststoffpulver wie z.B. Polyamid-Pulver verwendet werden, oder es können auch Metall- oder Keramikpulver zum Einsatz kommen. Es sind auch Gemische möglich, so können z.B. mit Kunststoff beschichtete Metalle verwendet werden.

## Patentansprüche

1. Vorrichtung (1) zum Herstellen eines dreidimensionalen Objekts durch schichtweises Verfestigen eines Aufbaumaterials an den dem Objekt entsprechenden Stellen in den jeweiligen Schichten, mit:
einem Maschinenrahmen (2, 3, 4, 5) und einem in dem Maschinenrahmen angeordneten Bauraum (10);
einer Energiequelle (6), die einen Strahl (9) zum selektiven Verfestigen des Aufbaumaterials aussendet; und
einem Lüfter (54),
**dadurch gekennzeichnet, dass**
der Lüfter (54) einen Luftstrom (T) zum Kühlen der Energiequelle (6) erzeugt; und
Verbindungskanäle (55) vorgesehen sind, die den Luftstrom (T) auf eine den Bauraum (10) begrenzende Trennwand (56) lenken.

2. Vorrichtung nach Anspruch 1, bei der Verbindungskanäle gebildet sind, die den Luftstrom (T) zu einer Aussenseite der Vorrichtung (1) weiterleiten.

3. Vorrichtung nach einem der Ansprüche 1 oder 2, bei der die Energiequelle (6) in einem Hohlraum (53) im Inneren eines Grundträgers (2) des Maschinenrahmens (2, 3, 4, 5) angeordnet ist.

4. Vorrichtung nach Anspruch 3, bei der der Hohlraum (53) einen Teil eines Strömungspfads für den Luftstrom (T) bildet.

5. Vorrichtung nach Anspruch 3 oder 4, bei der der Lüfter (54) in dem Hohlraum (53) vorgesehen ist.

6. Vorrichtung nach einem der Ansprüche 1 bis 5, bei der die Trennwand (56) den Bauraum (10) nach oben begrenzt.

7. Vorrichtung nach einem der Ansprüche 1 bis 6, bei der auf der dem Bauraum (10) abgewandten Seite der Trennwand (56) Komponenten (7, 8) eines Optiksystems und/oder einer Steuerung der Vorrichtung (1) angeordnet sind.

8. Vorrichtung nach einem der Ansprüche 1 bis 7, bei der die Vorrichtung ein Optiksystem mit einem Umlenkspiegel (7) und einem Scanner (8) aufweist und die Verbindungskanäle (55) den Luftstrom (T) in den Bereich des Scanners (8) auf die obere Trennwand (56) des Bauraums (10) leiten.

9. Vorrichtung nach einem der Ansprüche 1 bis 8, bei der die Energiequelle (6) ein Laser ist.

10. Vorrichtung nach einem der Ansprüche 1 bis 9, wobei die Vorrichtung eine Lasersintermaschine ist.

## Claims

1. Device (1) for manufacturing a three-dimensional object by layerwise solidification of a building material at the locations corresponding to the object in the respective layers, comprising:
a machine frame (2, 3, 4, 5) and a building space (10) arranged in the machine frame;
an energy source (6) which emits a beam (9) for selectively solidifying the building material; and
a fan (54),
**characterized in that**
the fan (54) generates an air flow (T) for cooling the energy source (6); and
connection passages (55) are provided which deflect the air flow (T) to a partition wall (56) confining the building space (10).

2. Device according to claim 1, in which connection passages are formed which forward the air flow (T) to the outside of the device (1).

3. Device according to anyone of claims 1 or 2, in which the energy source (6) is arranged in a cavity (53) inside a base support (2) of the machine frame (2, 3, 4, 5).

4. Device according to claim 3, in which the cavity (53) forms a part of a flow path for the air flow (T).

5. Device according to claim 3 or 4, in which the fan (54) is provided in the cavity (53).

6. Device according to anyone of claims 1 to 5, in which the partition wall (56) confines the upper side of the building space (10).

7. Device according to anyone of claims 1 to 6, in which the components (7, 8) of an optical system and/or a control means of the device (1) are arranged at that side of the partition wall (56) which is averted from the building space (10).

8. Device to anyone of claims 1 to 7, in which the device comprises an optical system having a deflection mirror (7) and a scanner (8), and the connection passages (55) guide the air flow (T) in the area of the scanner (8) to the upper partition wall (56) of the building space (10).

9. Device according to anyone of claims 1 to 8, in which the energy source (6) is a laser.

10. Device according to anyone of claims 1 to 9, wherein the device is a laser sintering machine.

## Revendications

1. Dispositif (1) pour la réalisation d'un objet tridimensionnel par une consolidation couche par couche d'un matériau d'élaboration au niveau des emplacements correspondants à l'objet dans les couches respectives, comportant :
un bâti de machine (2, 3, 4, 5) et une enceinte d'élaboration (10) agencée dans le bâti de machine ;
une source d'énergie (6), qui émet un rayon (9) pour la consolidation sélective du matériau d'élaboration ; et
un ventilateur (54),
**caractérisé en ce que**
le ventilateur (54) génère un flux d'air (T) destiné à refroidir la source d'énergie (6) ; et
des conduits de liaison (55) sont prévus, lesquels guident le flux d'air (T) sur une cloison (56) délimitant l'enceinte d'élaboration (10).

2. Dispositif selon la revendication 1, dans lequel des conduits de liaison sont formés, lesquels transfèrent le flux d'air (T) vers un côté extérieur du dispositif (1).

3. Dispositif selon la revendication 1 ou 2, dans lequel la source d'énergie (6) est agencée dans une cavité (53) à l'intérieur d'un support de base (2) du bâti de machine (2, 3, 4, 5).

4. Dispositif selon la revendication 3, dans lequel la cavité (53) forme une partie d'une voie de circulation pour le flux d'air (T).

5. Dispositif selon la revendication 3 ou 4, dans lequel le ventilateur (54) est prévu dans la cavité (53).

6. Dispositif selon l'une quelconque des revendications 1 à 5, dans lequel la cloison (56) délimite l'enceinte d'élaboration (10) par le haut.

7. Dispositif selon l'une quelconque des revendications 1 à 6, dans lequel des composants (7, 8) d'un système optique et/ou d'une commande du dispositif (1) sont agencés sur la face de la cloison (56) détournée de l'enceinte d'élaboration (10).

8. Dispositif selon l'une quelconque des revendications 1 à 7, dans lequel le dispositif comporte un système optique avec un miroir de déviation (7) et un scanner (8), et les conduits de liaison (55) guident le flux d'air (T) dans la zone du scanner (8) sur la cloison (58) supérieure de l'enceinte d'élaboration (10).

9. Dispositif selon l'une quelconque des revendications 1 à 8, dans lequel la source d'énergie (6) est un laser.

10. Dispositif selon l'une quelconque des revendications 1 à 9, dans lequel le dispositif est une machine de frittage par laser.
